# EUROPEAN PATENT APPLICATION

(11) **EP 4 366 321 A1**
(43) Date of publication of application: **08.05.2024**
(21) Application number: 22832445.5
(22) Date of filing: 03.03.2022
(51) Int. Cl.: H04N 23/60, H04N 5/265, H04N 5/268, H04N 21/234, H04N 21/258, H04N 21/2668

(54) **IMAGE PROCESSING DEVICE, IMAGE PROCESSING METHOD, AND PROGRAM**

(30) Priority: 02.07.2021 JP 2021111015
(71) Applicant: Sony Group Corporation, Tokyo 108-0075 (JP)
(72) Inventor: TANAKA, Ryuichi, Tokyo 108-0075 (JP); ISHII, Satoru, Tokyo 108-0075 (JP); NISHIO, Takaaki, Tokyo 108-0075 (JP); IWASE, Akira, Tokyo 108-0075 (JP)
(74) Representative: D Young & Co LLP
(86) International application number: PCT/JP2022/009131
(87) International publication number: WO 2023/276279

(57) **Abstract**

An image processing device includes an image processing unit configured to generate a delivery image in which a first area which is a main image area and a second area which is an image area different from the first area are formed in a screen on the basis of a plurality of input images which are images obtained by imaging an event by a plurality of imaging devices. Furthermore, the image processing device includes a control unit configured to control the image processing unit such that control in a plurality of switching control modes is capable of being executed when the input images included in the delivery image are switched, and the captured image displayed in the second area is capable of being switched on the basis of any of a plurality of the switching control modes.

## Description

### TECHNICAL FIELD

The present technology relates to an image processing device, an image processing method, and a program, and relates to a technology field of processing a delivery image in a case where an event is imaged by a plurality of imaging devices.

### BACKGROUND ART

Patent Document 1 below discloses a technology for controlling resolution with priority based on an operation history in a case of compressing and synthesizing images input from a plurality of cameras.

### CITATION LIST

### PATENT DOCUMENT

Patent Document 1: International Publication Pamphlet No. WO98/06222

### SUMMARY OF THE INVENTION

### PROBLEMS TO BE SOLVED BY THE INVENTION

For example, in an event such as a music live show, an image capturing is performed using a plurality of imaging devices (cameras), and a main image is generated and delivered while switching the captured images from imaging devices.

However, delivery destination users individually have different preferences and viewing purposes, and the delivered image is not necessarily an image that the users wants to see. For example, in a case of watching the music live show, a fan of each member of a music band, a person who wants to use for musical instrument practice as a reference, a person who is interested in musical equipment, and a person who wants to enjoy the entire music playing scenery, and the like have different preferences and purposes, respectively, and the contents desired to be watched are different.

Therefore, an object of the present technology is to enable generation of delivery images switched as more suitable images according to users having various preferences.

### SOLUTIONS TO PROBLEMS

According to an aspect of the present technology, there is provided an image processing device including: an image processing unit configured to generate a delivery image in which a first area that is a main image area and a second area that is an image area different from the first area are formed in a screen on the basis of a plurality of input images that are images obtained by imaging an event by a plurality of imaging devices; and a control unit configured to control the image processing unit such that control by a plurality of switching control modes is capable of being executed with respect to switching of each of the input images included in the delivery image and each of the captured images displayed in the second area is switched on the basis of any of a plurality of the switching control modes.

According to the aspect, a plurality of the switching control modes for the image of the second area is applied.

### BRIEF DESCRIPTION OF DRAWINGS

Fig. 1 is an explanatory diagram of an arrangement example of an imaging device for delivery according to an embodiment of the present technology.
Fig. 2 is an explanatory diagram of a delivery system including an image processing device according to the embodiment.
Fig. 3 is a block diagram of a processing function of an image processing unit according to the embodiment.
Fig. 4 is a block diagram of a control unit according to the embodiment.
Fig. 5 is an explanatory diagram of image switching according to the embodiment.
Fig. 6 is an explanatory diagram of an example of a graphical user interface (GUI) according to the embodiment.
Fig. 7 is a flowchart of a processing example in response to a user operation according to first, second, and third embodiments.
Fig. 8 is a flowchart of a processing example in mode selection according to the first embodiment.
Fig. 9 is a flowchart of a processing example in mode selection according to the second embodiment.
Fig. 10 is a flowchart of a processing example in mode selection according to the third embodiment.
Fig. 11 is an explanatory diagram of a GUI example according to the embodiment.
Fig. 12 is an explanatory diagram of a GUI example according to the embodiment.
Fig. 13 is an explanatory diagram of a GUI example in which a recommendation area is fixed according to the embodiment.
Fig. 14 is a flowchart of a processing example in which a recommendation area is fixed according to the embodiment.
Fig. 15 is an explanatory diagram of a GUI example according to the embodiment.
Fig. 16 is a flowchart of a processing example according to a fourth embodiment.
Fig. 17 is a flowchart of a processing example according to a fifth embodiment.
Fig. 18 is an explanatory diagram of an example of association according to the embodiment.

### MODE FOR CARRYING OUT THE INVENTION

Hereinafter, embodiments will be described in the following order.
<1. System configuration>
<2. Delivery image and switching control mode>
<3. First embodiment>
<4. Second embodiment>
<5. Third embodiment>
<6. GUI example>
<7. Fourth embodiment>
<8. Fifth embodiment>
<9. Applicable processing example>
<10. Conclusion and Modification example>

### <1. System configuration>

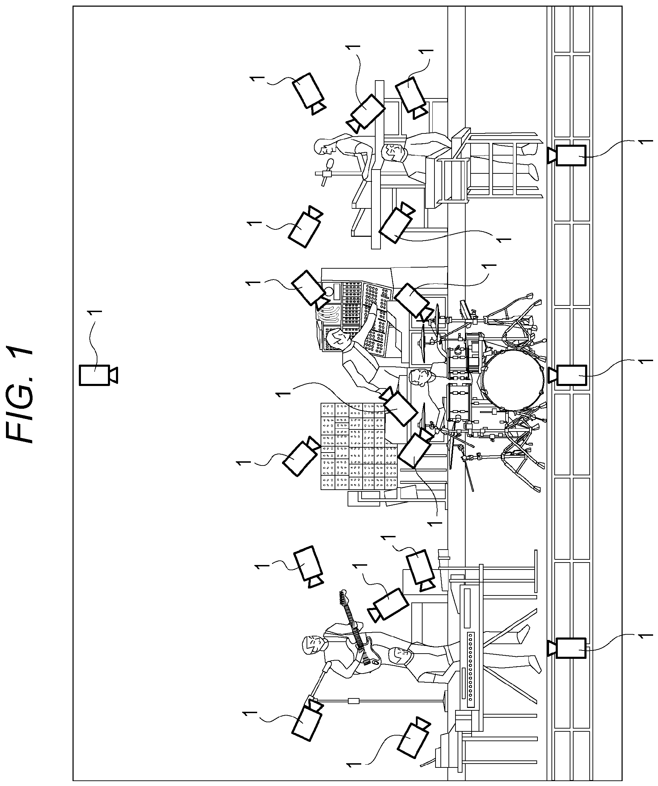

Fig. 1 illustrates an arrangement example of an imaging device (camera) 1 in a delivery system of an embodiment. As the imaging device 1, there are various imaging devices as a video camera or a still camera. The illustrated imaging device 1 is an example of an imaging device that captures a moving image of a performer or the like on a stage.

Note that in the present disclosure, an "image" includes both a moving image and a still image. Although moving image delivery will be mainly described as an example, the image to be delivered is not limited to the moving image, and may be a still image or a slide show using a plurality of the still images.

Furthermore, the "image" refers to an image actually displayed on a screen, but the "image" in a signal processing process or a transmission path until being displayed on the screen refers to image data.

In the example of Fig. 1, an example in which a plurality of the imaging devices 1 is disposed on a stage of a music live show of six performers is schematically illustrated.

In this case, three main band members are present in a front row and three support members are present in a rear row. As the imaging device 1, there are an imaging device disposed to image the entire stage, an imaging device disposed to image an individual member upward, an imaging device disposed to image a hand of the member or an equipment, and the like.

In this way, in a case where a plurality of the imaging devices 1 is disposed on a live show stage or the like and the live image delivery of an event is performed, normally, images from the respective imaging devices 1 are sequentially switched by a switcher, and one system of images is generated and delivered as an image (so-called main image) to be delivered to the user among the images from the imaging devices 1.

In general image switching in this case, the entire image and the images of the three band members are sequentially switched, and the images of the support members are occasionally inserted.

In the present embodiment, although details will be described later, an image in a certain switching control mode is presented as a recommendation image in addition to the main image or a main image such as a specific image of the entire stage. In this case, the switching control mode is selected according to the preference of each user, and thus image switching suitable for each user can be easily performed.

Note that in the present disclosure, the "user" refers to a delivery destination user who views delivery content.

Furthermore, in the present disclosure, "live" means a "live show" and includes "music live show (concert)", and a "live event".

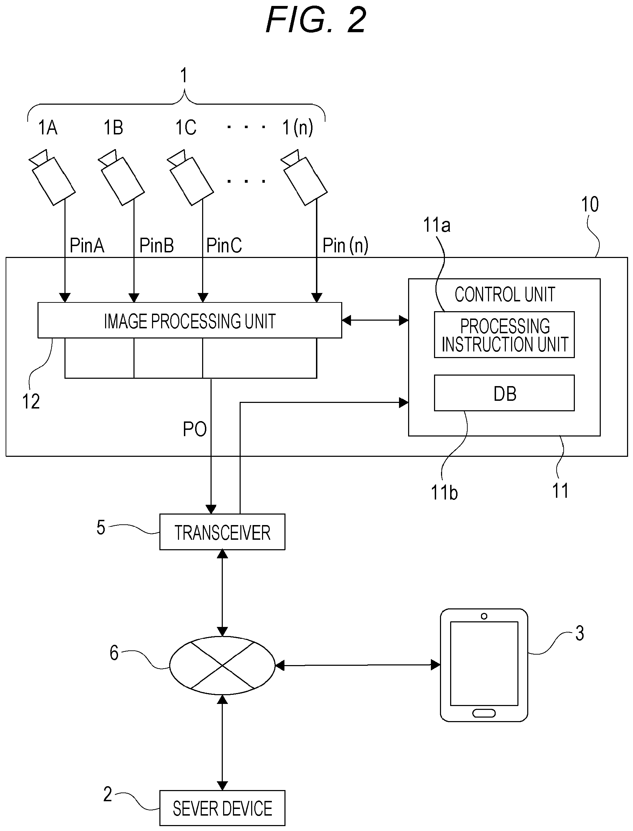

Fig. 2 illustrates a configuration of a delivery system according to the embodiment. In the drawing, the imaging devices 1 (1A, ..., and 1(n)), a server device 2, a user terminal 3, a transceiver 5, a network 6, and an image processing device 10 are illustrated.

The imaging devices 1A, 1B, 1C, ..., and 1(n) respectively indicates the imaging devices 1 disposed at respective positions as illustrated in Fig. 1. Note that for explanation, the imaging devices 1A, 1B, ..., and 1(n) will be denoted as "imaging device 1" unless otherwise distinguished.

The captured images are respectively input from the imaging devices 1A, 1B, 1C, ..., and 1(n) to the image processing device 10. These input images are set as input images PinA, PinB, PinC, ..., and Pin(n). Note that these input images PinA, PinB, PinC, ..., and Pin(n) will be collectively referred to as an "input image Pin".

In the delivery system of the present embodiment, it is conceivable that the input image Pin is an image captured in a real-time manner by each of the imaging devices 1. For example, the image processing device 10 is installed in a venue for an event such as a live event, and an image captured by each imaging device 1 is input through a cable or the like.

However, the present disclosure is not necessarily limited to such a form. The image processing device 10 may be disposed at a remote place from the event venue, and each of the input images Pin may be transmitted by wired or wireless communication.

Moreover, the delivery in the present embodiment is not limited to real-time delivery. For example, the images captured by the imaging devices 1 may be recorded on a recording medium. Then, the images captured by the imaging devices 1 may be synchronously read from the recording medium at a later time point, and the read images may be input to the image processing device 10 as input images PinA, PinB, PinC, ..., and Pin(n).

The image processing device 10 includes a control unit 11 and an image processing unit 12.

The image processing unit 12 generates a delivery image PO having, in a screen, an image of a first area which is a main image area, and an image of a second area which is an image area different from the first area on the basis of a plurality of the input images Pin which are images obtained by imaging an event by a plurality of imaging devices 1.

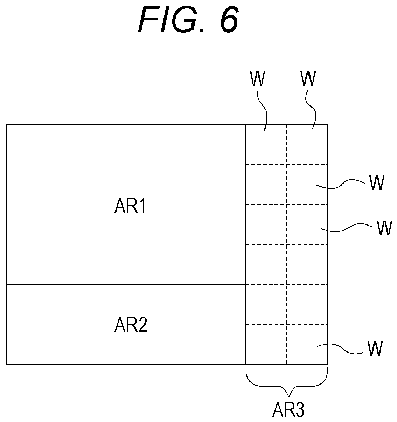

Note that in the present embodiment, an example is assumed in which the first area is a main area AR1 in Fig. 6 to be described later, and the second area is a recommendation area AR2 in Fig. 6. Moreover, in some cases, a camera area AR3 of Fig. 6 is provided as a third area.

The control unit 11 controls the image processing unit 12 such that control in a plurality of switching control modes can be executed when the input images Pin included in the delivery image PO are switched, and the image displayed in the second area can be switched on the basis of any of a plurality of the switching control modes.

Therefore, the control unit 11 includes a processing instruction unit 11a. The processing instruction unit 11a instructs which input images Pin are used to generate the delivery image PO in the image processing unit 12. In this case, an instruction can be given by applying various switching control modes to be described later.

Furthermore, the control unit 11 includes a database (DB) 11b. In the DB 11b, information for each user, such as an operation history and attribute information for each delivery destination user can be stored.

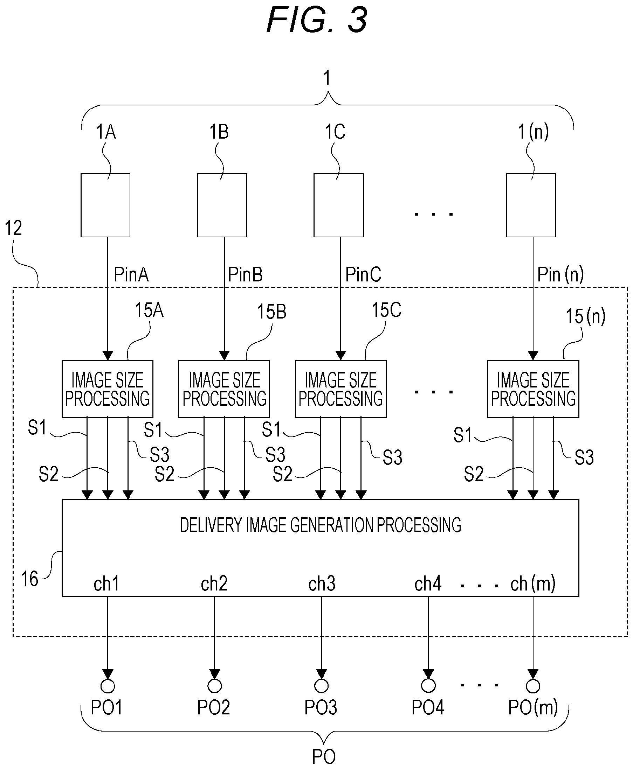

A processing example of the image processing unit 12 is illustrated in Fig. 3.

The image processing unit 12 is configured as an image processing processor by, for example, a digital signal processor (DSP) or the like. In Fig. 3, processing performed in the image processing unit 12 is illustrated as blocks.

The image processing unit 12 performs image size processing 15A, 15B, 15C, ..., and 15(n) on the input images PinA, PinB, PinC, ..., and Pin(n), respectively. Note that these are collectively referred to as "image size processing 15".

The image size processing 15 includes processing of setting the input image Pin as an image S1 having the size used for the first area, processing of setting the input image Pin as an image S2 having the size used for the second area, and processing of setting the input image Pin as an image S3 having the size used for the third area.

The first area (main area AR1) is, for example, the widest area on the screen. The second area (recommendation area AR2) is an area smaller than the first area. The third area (camera area AR3) is an area in which the images of the imaging devices 1 are arranged, and is an area in which the images are displayed at the smallest size. Note that such a relationship between the sizes of the areas is an example.

In order to obtain the image S1 displayed in the first area, the image S2 displayed in the second area, and the image S3 displayed in the third area, data size conversion processing is performed on the input image Pin in the image size processing 15. The data size conversion is, for example, resolution conversion processing. The resolution is set as image S1 > image S2 > image S3. Note that the image S1 may have the highest resolution, and the image S2 and the image S3 may have substantially the same resolution. That is, the resolution may be set as image S1 > image S2 ≥ image S3. However, there may be a case where it is difficult to maintain the resolution of the image S1 due to a change in a communication state or a processing load of the network 6. Considering this point, the resolution may be set as image S1 ≥ image S2 ≥ image S3.

Furthermore, image cutout processing may be performed in the image size processing 15. For example, the image S1 is a full-size image, the image S2 is an image obtained by cutting out the peripheral portion of the image, and the image S3 is an image obtained by cutting out the central portion of the image.

Furthermore, in the image size processing 15, the compression ratio may be adjusted. For example, the processing is performed such that the compression ratio increases stepwise in the image S1, the image S2, and the image S3.

Furthermore, in the image size processing 15, frame rate conversion may be performed. The image S1 in the first area may have the highest frame rate, the image S2 may have a low frame rate, and the image S3 may have a lower frame rate. Note that the image S1 may have the highest frame rate, and the image S2 and the image S3 may have substantially the same frame rate That is, the frame rate may be set as image S1 > image S2 ≥ image S3. Also in this case, the frame rate may be set as image S1 ≥ image S2 ≥ image S3 in consideration of a temporary change due to a communication state or the like.

Furthermore, for example, the image S3 may be a so-called thumbnail image. Assuming a moving image, it is also conceivable to extract an image of one frame for a long span, for example, every minute to obtain a thumbnail image converted to low resolution.

As in the above-described example, in the image size processing 15, a high-definition image having the largest data amount is generated as the image S1, and the image S2 and the image S3 are pieces of data having a data amount smaller than that of the image S1. Note that the data amount of the image S1 is only required to be maximized, and the image S2 and the image S3 may have substantially the same data amount. That is, the data amount may be set as image S1 > image S2 ≥ image S3.

Furthermore, the processing in the image size processing 15 described above is an example, and there is a possibility that the resolution or the frame rate of the image S1 has substantially the same value as that of the resolution or the frame rate of the image S2 depending on the state of the network 6, the setting by the delivery destination user, and the like. In this sense, it is conceivable to set the data amount as image S1 ≥ image S2 ≥ image S3.

Notation in the present disclosure, each notation of the "image S1", the "image S2", and the "image S3" is used particularly in a case where a difference in data amount of the input image Pin is indicated. The image S1, the image S2, and the image S3 are collectively referred to as an "input image Pin".

The image processing unit 12 performs the image size processing 15 on each of the input images PinA, PinB, ..., and Pin(n), and then performs delivery image generation processing 16 when pieces of image data are obtained as the image S1, the image S2, and the image S3, respectively.

In the delivery image generation processing 16, the image S1, the image S2, and the image S3 are selectively synthesized to generate the delivery images PO1, PO2, PO3, ..., and PO(m) of a plurality of channels ch1, ch2, ch3, ..., and ch(m). Note that the delivery images PO1, PO2, PO3, ..., and PO(m) are collectively referred to as a "delivery image PO".

The delivery image PO of one channel is generated corresponding to, for example, one delivery destination user (a viewer who views a delivery image at a delivery destination. Hereinafter, also simply referred to as a "user"). Therefore, the number of channels "m" is not fixed, and varies depending on the number of users at that time. Although it can be considered that the number of users is the number of channels, the number of users is not the number of channels as it is since users to whom delivery can be performed through a common channel are also assumed. In the delivery images PO of the channels, images switched in the first area and the second area are different, and the upper limit of the number of channels can be determined by the number of combinations according to the number of imaging devices 1 and the number of switching control modes to be described later.

The delivery images PO are pieces of image data including the image S1 of the first area, the image S2 of the second area, and the image S3 of the third area, but a combination of captured images of the image S1, the image S2, and the image S3, which are obtained by the imaging devices 1, is different. Furthermore, the combination of the image S1, the image S2, and the image S3 in each delivery image PO also changes with the progress of time. That is, this is because the images displayed in the first area and the second area are switched for each scene so as to match the preference of the delivery destination user.

Furthermore, the delivery image generation processing 16 selectively synthesizes the image S1, the image S2, and the image S3 to generate one delivery image PO. In this case, "synthesis" may be processing of synthesizing the image S1, the image S2, and the image S3 to generate one frame of image data so as to be in a form of being divided and displayed on the screen, or may be processing of respectively associating pieces of frame data as the image S1, the image S2, and the image S3 of each imaging device 1 as one set of data (that is, data of one frame timing in one channel) to be simultaneously displayed.

The delivery images PO generated by the image processing unit 12 are transmitted to the network 6 by the transceiver 5 in Fig. 2 and, for example, supplied to the server device 2. Note that the transceiver 5 may directly supply each of the delivery images PO to the server device 2 by wired communication or wireless communication without passing through the network 6.

Furthermore, the image processing unit 12 may be configured in the server device 2.

The server device 2 is a server that performs a delivery service for the user, and, for example, delivers the delivery image PO of the channel, which is generated corresponding to the user, to the user terminal 3 of the user who logs in to the delivery service via the network 6.

The user terminal 3 is an information processing device of an individual user, and examples of the user terminal 3 include, for example, a mobile terminal device such as a smartphone, a personal computer device, and a display device capable of network communication.

The user terminal 3 includes a display device, and the delivered image can be viewed through the user terminal 3. Furthermore, the user can perform various operations on the delivery image displayed by a predetermined GUI. The operation information is transmitted to the control unit 11 of the image processing device 10 via the network 6.

As the network 6, for example, the Internet, a home network, a local area network (LAN), a satellite communication network, and various other networks are assumed.

Note that in Fig. 2, the server device 2, the user terminal 3, and the transceiver 5 communicate with each other via the network 6, but the server device 2, the user terminal 3, and the transceiver 5 may directly communicate with each other without the network 6.

The control unit 11 of the image processing device 10 in Fig. 2 includes, for example, a microprocessor and a storage device. Alternatively, the control unit 11 may be configured as a computer system including a plurality of chips, an interface, and various devices.

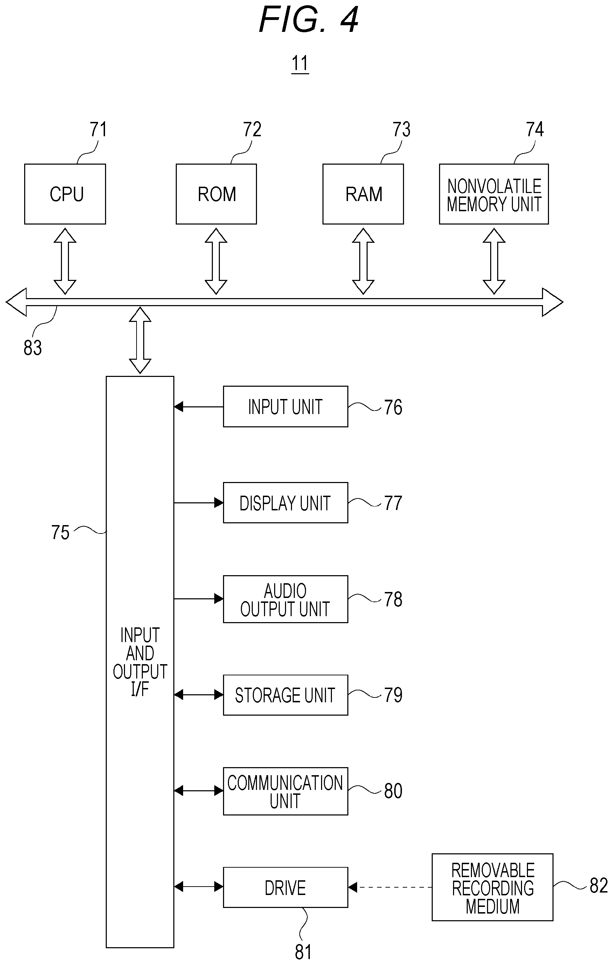

A configuration example of the control unit 11 as described above is illustrated in Fig. 4.

The control unit 11 includes, for example, a central processing unit (CPU) 71. For example, the CPU 71 executes various processing in accordance with a program stored in a nonvolatile memory unit 74 such as a read only memory (ROM) 72 or an electrically erasable programmable read only memory (EEP-ROM), or a program loaded from a storage unit 79 to a random access memory (RAM) 73. Furthermore, the RAM 73 also appropriately stores data and the like necessary for the CPU 71 to execute the various types of processing.

Note that instead of the CPU 71 or together with the CPU 71, a graphics processing unit (GPU), general-purpose computing on graphics processing units (GPGPU), an artificial intelligence (AI) processor, or the like may be provided.

The CPU 71, the ROM 72, the RAM 73, and the nonvolatile memory unit 74 are connected to each other via a bus 83. Furthermore, an input/output interface 75 is also connected to the bus 83.

In some cases, an input unit 76 including an operation element and an operation device is connected to the input/output interface 75. For example, as the input unit 76, various types of operation elements and operation devices such as a keyboard, a mouse, a key, a dial, a touch panel, a touch pad, a remote controller, and the like are assumed.

An operation by an operator is sensed by the input unit 76, and a signal corresponding to the input operation is interpreted by the CPU 71.

Furthermore, a display unit 77 including a liquid crystal display (LCD), and an organic electro-luminescence (EL) display, and an audio output unit 78 including a speaker may be integrally provided on or may be separately connected to the input/output interface 75.

The display unit 77 executes display of an image for various types of image processing, a moving image to be processed, and the like on a display screen on the basis of an instruction from the CPU 71. Furthermore, the display unit 77 displays various types of operation menus, icons, messages, and the like, that is, performs display as a graphical user interface (GUI) on the basis of an instruction from the CPU 71.

In some cases, the storage unit 79 including a hard disk, and a solid-state memory, and a communication unit 80 including a modem are connected to the input/output interface 75.

The communication unit 80 performs communication processing via a transmission path such as the Internet, wired/wireless communication with various types of devices, bus communication, and the like.

Furthermore, a drive 81 is connected to the input/output interface 75 as necessary, and a removable recording medium 82 such as a magnetic disk, an optical disk, a magneto-optical disk, a semiconductor memory, or the like is appropriately mounted.

The drive 81 can read a data file such as an image file, various types of computer programs, and the like from the removable recording medium 82. The read data file is stored in the storage unit 79, and images and audio included in the data file are output by the display unit 77 and the audio output unit 78. Furthermore, the computer program and the like read from the removable recording medium 82 are installed in the storage unit 79, as necessary.

In the control unit 11 of the configuration as described above, for example, software for processing of the present embodiment can be installed via network communication by the communication unit 80 or the removable recording medium 82. Alternatively, the software may be stored in advance in the ROM 72, the storage unit 79, or the like.

In the control unit 11 of the configuration described above, for example, the function as the processing instruction unit 11a is exerted by the CPU 71 on the basis of the program.

Furthermore, the DB 11b can be constructed in the storage unit 79.

Note that as a configuration example of the information processing device as the server device 2 or the user terminal 3 in Fig. 2, the configuration example as illustrated in Fig. 4 is assumed.

### <2. Delivery image and switching control mode>

As illustrated in Figs. 1 and 2, in a case where the input images Pin from a plurality of the imaging devices 1 are input to the image processing unit 12, the image processing unit 12 can generate the delivery images PO having various contents by performing image switching.

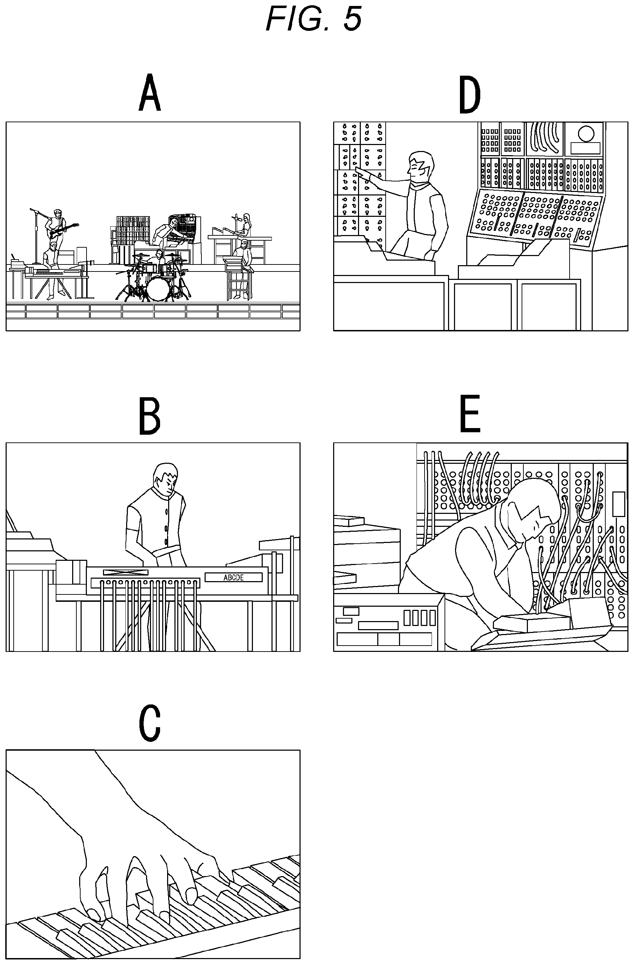

Figs. 5A, 5B, 5C, 5D, and 5E illustrate examples of input images Pin obtained by, for example, five imaging devices 1.

Fig. 5A is an image from the imaging device 1 in which the entire stage is imaged as an image for a "distance". Figs. 5B, 5D, and 5E are images showing individual band members close-up, and Fig. 5C is an example of an image showing a hand of a certain member close-up.

For example, by switching the images having various contents according to the progress of the musical piece, the images can be viewed from various viewpoints as compared with the case where the live show is watched at the venue. However, what kind of image is desired to be viewed varies depending on the user.

Therefore, in the present embodiment, for example, as the GUI on the screen displayed on the user terminal 3, the main area AR1, the recommendation area AR2, and the camera area AR3 as illustrated in Fig. 6 are displayed, and any operation can be performed by the user.

For example, the main area AR1 occupies the largest area on the display screen, and an image with the highest resolution is displayed. The main area AR1 has the meaning like a so-called main image, and an image mainly viewed by the user is displayed.

For example, the image of the main area AR1 may be fixed as an image showing the entire stage as illustrated in Fig. 5A or may be switched to images as illustrated in Figs. 5B, 5C, 5D, and 5E according to the progress of the musical piece. Moreover, in the present embodiment, when the user operates the recommendation area AR2 or the camera area AR3, each of the images corresponding to the areas is displayed in the main area AR1.

The recommendation area AR2 is an area in which an image is switched on the basis of a certain switching control mode. The image switching means that the image to be displayed is switched from an image among the input images PinA, ..., and Pin(n). For example, any of the input images PinA, ..., and Pin(n) is sequentially selected according to the progress of the musical piece, and the selected image is displayed in the recommendation area AR2.

In the present embodiment, a plurality of modes is provided as the switching control mode for performing the image switching, and the image to be displayed in the recommendation area AR2 is switched according to any selected switching control mode. The selection of the switching control mode and the switching control of the image to be displayed in the recommendation area AR2 according to the selected switching control mode are performed by the control unit 11.

The image processing unit 12 selects the image S2 corresponding to any one of the input images PinA, ..., and Pin(n) as the image S2 to be displayed in the recommendation area AR2 in response to the instruction to switch the image based on the selected switching control mode by the control unit 11, and generates the delivery image PO of one channel.

Furthermore, the image processing unit 12 also switches the image to be displayed in the main area AR1 according to the instruction from the control unit 11.

Here, the selection of the switching control mode by the control unit 11 is individually performed for each user. That is, the switching control mode is selected/updated for each channel. As a result, the image of the recommendation area AR2 is set to be an image on which switching suitable for the user is performed for each user.

The camera area AR3 in Fig. 6 is an area in which captured images of a plurality of the imaging devices 1 are displayed. Fig. 6 illustrates an example in which the camera area AR3 is divided into 12 frames W, and for example, each frame W is an area in which an image captured by each of the imaging devices 1A, 1B, ... is displayed. Therefore, the division indicated by a broken line (the number of frames W) in the camera area AR3 is only required to be performed according to the number of imaging devices 1. Furthermore, in a case where a larger number of imaging devices 1 are used and thus all the captured images cannot be displayed, the frames W of the camera area AR3 may be scrolled and displayed, or the images captured by some of the imaging devices 1 may be selectively displayed. Furthermore, the imaging device 1 on which the captured image is displayed may be switched at regular time intervals.

Furthermore, an image captured by the imaging device 1 that is not displayed in the main area AR1 or the recommendation area AR2 may be assigned to each frame W of the camera area AR3 at each time point.

In the user terminal 3, for example, the recommendation area AR2 or an arbitrary frame W in the camera area AR3 can be designated by a touch panel on a display on which such a GUI is displayed, a cursor operation, or the like.

As the above-described switching control mode, the following modes M1, M2, M3, M4, and M5 are taken as examples. Note that in the present disclosure, each of the switching control modes is also simply referred to as a "mode".

The mode M1 is a mode based on preliminary training by machine learning, and is specifically a mode in which image switching control is performed on the basis of progress information regarding an event, which is obtained in advance.

An event to which the delivery system of the present embodiment can be applied is assumed to be a music live show, a play, an opera, a ballet, a dance, or the like, and the progress thereof is determined to some extent. That is, the event is an event in which progress information of a musical score for each musical piece, a live set list, a script, and a scenario can be obtained. It may be a part of the event. Furthermore, the progress information may be acquired by analyzing a moving image captured at the time of a live show rehearsal, another live moving image of the target musical piece, and a promotion moving image (including audio) of the target musical piece.

For example, in the music live show, when musical score information exists as the progress information regarding a musical piece, the progress of the musical piece during the performance can be seen in advance. For example, the progress information includes a main musical instrument in the intro period (introduction portion of the musical piece), a singing start of a main vocal or a start timing of a main melody of the musical instrument, a timing of "determining" of a rhythm section, a period during which attention is desired to be paid to a back chorus, a lead instrument, such as a guitar solo, played in an interlude or a period in the interlude, and an outro period (final portion of the musical piece).

For example, on the basis of such progress information, it can be understood which image captured by the imaging device 1 is only required to be selected from the start timing of the musical piece.

The mode M1 is a mode for controlling image switching on the basis of such progress information.

An example of the mode M1 will be described more specifically.

For example, the control unit 11 analyzes and stores the captured image to be provided to the user in advance according to a "viewpoint of a melody" and a "viewpoint of a change" in each ongoing scene of a specific musical piece of the live show on the basis of the musical score, the moving image content, and the like. That is, according to the progress of a certain musical piece, the user analyzes which image captured by the imaging device 1 is an image to be viewed the most.

For example, an image showing a specific portion of a specific performer is selected as the "viewpoint of a melody" and the "viewpoint of a change" in the following cases.

First, there are the following examples as the "viewpoint of a melody".
· At the time of the most prominent main melody performance, an image is mainly switched to an image of a performer of the main melody and an image of the hand of the performer.
· At the time of the second most prominent main melody performance, an image is mainly switched to an image of a performer of the accompanying melody and an image of the hand of the performer.
· For the third most prominent backing, the images are switched such that the performers of the musical instruments are shown in an order. Note that the backing is a performance having a certain pattern or rhythm maintained while assisting a solo performance of another performer.
· At the time of the particularly prominent solo performance in a specific scene, an image is mainly switched to an image of a performer of the solo musical instrument and an image of the hand of the performer.

Examples of the progress information for analyzing the viewpoint of a melody include a piano score, a band score, an orchestral score, and a musical score of a musical instrument for a solo performance.

According to the piano score, a base sound, a chord, an accompanying melody, and the like can be seen as a performance portion by the left hand, and a main melody and a chord can be seen as a portion of a performance by the right hand.

According to the band score, the performance state of each musical instrument can be seen in the musical scores of the musical instruments, such as a keyboard score, a guitar score (normal musical score and a tab score), a bass score (normal musical score and tab score), and a drum score. Note that the tab score is a musical score indicating which string is pressed at which position. The drum score is a musical score in which a snare, a hi-hat, a bass drum, a tama, cymbals, and the like are indicated in association with a specific scale.

As the orchestral score, there are a full musical score (a score for each musical instrument of the orchestra), a condensed score (a score mainly representing an orchestral musical piece with wind and string instrument in a simplified manner), and the like, and according to these, the performance state of each musical instrument can be seen in the progress of the musical piece.

As a musical score of a musical instrument for a solo performance, there are musical scores for a string instrument, a woodwind instrument, a brass instrument, a percussion instrument, Japanese musical instrument (Koto, Shamisen, Shakuhachi, and the like), and other musical folk musical instruments in various countries of the world, and the performance state of each musical instrument can be seen in the progress of the musical piece.

The control unit 11 can determine a timing and a period of a main melody, an accompanying melody, a solo performance, backing, and the like in the musical piece by inputting the data of the musical score as described above in advance and performing analysis processing.

Next, there are the following examples as the "viewpoint of a melody".

### · Brightness and darkness due to major scale/minor scale

At the time of a change from a bright atmosphere (major scale) to a dark atmosphere (minor scale) or at the time of a change from a dark atmosphere (minor scale) to a bright atmosphere (major scale), the image is switched to an image of a performer of each musical instrument having the highest sound volume before and after the change.

### · Slow and fast

With respect to a change in tempo and a change in beat, at the time of a change from slow to fast and from fast to slow, the image is switched to an image of the performer of each musical instrument having the highest sound volume before and after the change.

### · Sound volume magnitude

When the sound volume is rapidly increased or decreased, the image is switched to the image of the performer of the main musical instrument corresponding to this.

The extraction of the presence or absence of a change, the timing, and the like in these viewpoints of the change can be determined by focusing on the following points.

A main scale and a scale change of the musical piece are determined, and for example, a performer of a melody which gives an impression of a major scale bright atmosphere and a minor scale dark atmosphere is determined.

The presence or absence of a repeat sign is also a material for extraction. In a case where there is a repeat sign, in general, the sound volume or change is often made larger in the second performance than that in the first performance in order to impress the audience. Therefore, it is possible to make a determination such that the performer of the main melody is selected for a longer time at that time.

A large number of musical notes as a whole are also materials for determination. When the number of all musical notes or half notes is large, the musical piece has a small change, and when the number of eighth notes or sixteenth notes is large, the musical piece has a large change.

The presence or absence of a speed symbol and a fermata are used to determine a change in beat or tempo in the middle of the music.

The sound volume sign and the sound volume change sign (Crescendo, Diminuendo) are used to determine a sound volume change.

The title of a music is a material for determining what the song indicate as a whole. For example, it is possible to roughly determine whether the music is a bright music or a dark music as a whole or whether or not music changes in the middle.

By these determinations, it is possible to set a timing of switching an image in a viewpoint of a change by determining brightness/darkness, slowness/fastness, and sound volume magnitude in the musical piece.

The mode M2 is a mode in which image switching control is performed on a delivery image PO(x) for a specific delivery destination user on the basis of viewing information of the delivery destination user other than the specific delivery destination user. Note that the delivery image PO(x) means any of the delivery images PO1 to PO(m).

That is, in the mode M2, in the image to be delivered to a certain user, image switching control is performed according to a viewing state of another user. For example, the switching control is performed so as to select an image viewed by many other users from among a plurality of the input images Pin.

Since the control unit 11 detects operation information of each of the delivery destination users, it is possible to determine which image of the input images Pin most of the other users from the viewpoint of a certain user U1 are viewing in the main area AR1. The mode M2 is a mode in which sequential image switching is performed so as to provide such a determination result as an image of the recommendation area AR2 for the user U1.

The mode M3 is a mode in which image switching control is performed on a delivery image PO(x) for a specific delivery destination user on the basis of viewing information of other delivery destination users having an attribute the same as or similar to the attribute of the specific delivery destination user.

The control unit 11 collects user attribute information for each user.

For example, the user terminal 3 is assumed to have the same function and shape as those of a tablet terminal. That is, there is a display device with a touch panel, Internet access is possible, and an ultra-small camera is incorporated.

In such a case, the following items can be automatically collected.

For example, the user sees themselves reflected in the ultra-small camera of the user terminal 3. By acquiring the image, the control unit 11 can determine gender, age, skin color, and race, and can determine whether or not there are other characteristics such as long hair/short hair, or facial paint, and the like. The preference of the user is estimated from such an appearance determination. For example, when a person is male and has long hair, it can be estimated that the "person loves rock music" or "loves an electric guitar". Furthermore, when there is a paint on the face, it can be estimated that the person is a "fan of a soccer or a baseball, or a fan of lively music from a musical instrument, and the like". Such estimation information is stored, as an attribute of the user, for example, in the DB 11b.

Note that the user may input the age, the gender, the preference, and the like and use them.

Furthermore, the control unit 11 acquires position information by a GPS receiver or the like in the user terminal 3, and recognizes a place where the user terminal 3 is used. Then, in a case where the user is at the same place for a certain period of time, the place is stored, as the attribute information of the user, in the DB 11b.

The control unit 11 recognizes a place that is recorded the most during a certain period such as one week or one month as "home" or a "hotel where the user is staying for a long time", or the like, and can estimate the preference of the user from information such as an explanatory note and title displayed in a moving image the user manually searches for and views by using the user terminal 3 on a daily basis, analysis of the moving image itself, and the frequency of repeated viewing. For example, it is possible to estimate a favorite artist (singer or performer), a favorite musical piece, a favorite scene regarding a live show, a specific portion of the musical piece, and the like. Furthermore, when the property information of the moving image downloaded to the user terminal 3 can be acquired, the control unit 11 can estimate content, an artist, or the like preferred by the user.

Such estimation information is stored, as an attribute of the user, for example, in the DB 11b.

For example, since the attribute information as in the above-described example is managed for each user in the DB 11b, image switching can be performed on the delivery image PO(x) for a certain user with reference to an image selected in the main area AR1 of the delivery image PO of another user having a common or similar attribute. The mode M3 performs such image switching control based on the common attribute.

The mode M4 is a mode in which image switching control is performed on a plurality of input images related to a specific subject.

For example, it is a mode of switching a face, hands, a musical instrument, and the like by focusing on a specific artist, particularly one of the band members. For a user who is a fan of a specific artist or a user who views the performance as a reference for musical instrument practice, there is a case where the user wants to focus on only a specific member. In this case, the image captured by the imaging device 1 showing the specific member is delivered.

The mode M5 is a mode for randomly performing image switching control. In some cases, the user wants to see various members or performance scenes regardless of a specific scene. The mode M5 is a switching control mode suitable for such a case.

### <3. First embodiment>

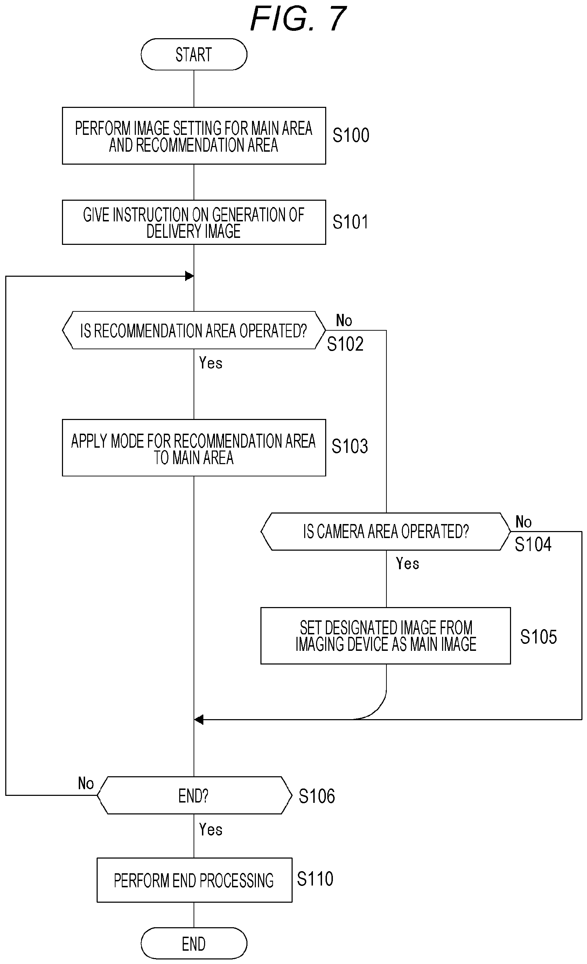

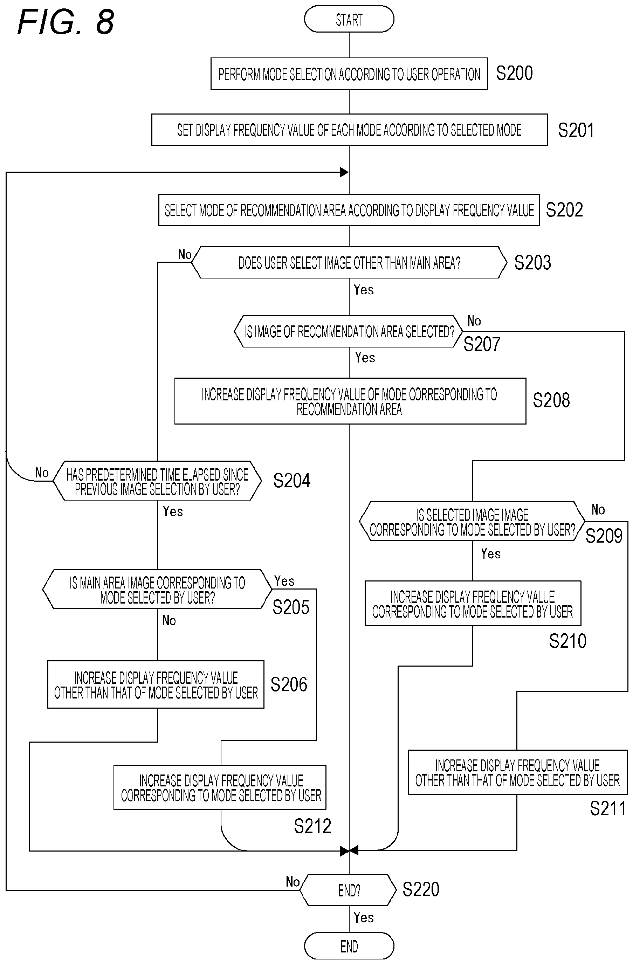

Figs. 7 and 8 illustrate processing examples according to a first embodiment. The processing to be described below is a control processing example by the control unit 11, and the delivery image PO is generated by the image processing unit 12 according to the control processing.

As the first embodiment, any of the modes M1 and M2 is selectively applied in the image switching in the recommendation area AR2.

Fig. 7 illustrates processing of image switching control according to a user's operation, and Fig. 8 illustrates processing related to a switching control mode applied to display in the recommendation area AR2 or the main area AR1.

The control unit 11 starts the processing of Fig. 7 and the processing of Fig. 8 in parallel at a certain start timing. For example, in the case of an event of delivering a music live show, a timing when the delivery is started, a timing when performance of a specific musical piece is started, or the like, is the start timing of the processing.

Note that, for example, in a case where the above-described mode M1 is used as one of the modes, the period during which these processing are performed can be a period during which image switching control based on the progress information is possible. Of course, this is an example. Various periods can be set as the entire period of the delivery or a part of the delivery period.

First, the processing of Fig. 7 will be described.

In step S100, the control unit 11 performs image setting for the main area AR1 and the recommendation area AR2. The image setting is processing of determining which input image Pin is initially applied to the main area AR1 or the recommendation area AR2, or in which mode the switching control is performed.

For example, it is initially set such that the main area AR1 is fixed to the input image Pin obtained by capturing the entire stage. For example, it means that when the imaging device 1A is capturing the image of the entire stage, the image of the main area AR1 is fixed to the image of the input image PinA.

Furthermore, the mode selected in step S200 of Fig. 8 to be described later is preferentially applied to the recommendation area AR2, the image switching control is applied, and the delivery progresses while the input images PinA, ..., and Pin(n) are switched.

However, according to the processing of Fig. 8 to be described later, in the first embodiment, in the recommendation area AR2, the switching control mode is fixed to a specific mode and the image switching is not performed, and for example, any one of the modes M1 and M2 is preferentially applied and the image switching is also performed in the other mode.

Note that in a case where the switching control mode suitable for the delivery destination user has been determined in the past, or in a case where the delivery of the same musical piece, artist, or the like has been performed in the past and the switching control mode has been selected, setting may be made such that the switching control is performed in the corresponding mode initially in the main area AR1 in step S100 of Fig. 7.

In step S101, the control unit 11 instructs the image processing unit 12 to generate a delivery image PO according to the setting in step S100. As a result, an initial delivery image PO for a certain user is generated and delivered to the user terminal 3.

In the user terminal 3, for example, images are displayed in the main area AR1, the recommendation area AR2, and the camera area AR3 in a state as illustrated in Fig. 6.

For example, in the main area AR1, an image of the entire stage, for example, an image S1 based on the input image PinA is first displayed, and in the recommendation area AR2, an image S2 based on each of the input images PinA, ..., and Pin(n) is displayed while being switched by the mode M1 or the mode M2. In the camera area AR3, an image S3 based on each of the input images PinA, ..., and Pin(n) is displayed.

During the delivery, the control unit 11 monitors the user's operation in steps S102 and S104. The user can perform any operation such as a tap operation, a pinch operation, or a cursor movement and enter operation on the GUI screen of Fig. 6 of the user terminal 3, and the operation is transmitted to the control unit 11 via the network 6.

When it is detected that the user performs an operation of designating the recommendation area AR2, the control unit 11 causes the processing to proceed from step S102 to step S103.

In this case, the control unit 11 performs control so as to apply the switching control mode applied to the recommendation area AR2 at that time to the main area AR1. For example, when image switching is performed by the mode M1 in the recommendation area AR2 at the time of the user operation, the control unit 11 instructs the image processing unit 12 to perform image switching in the mode M1 also in the main area AR1 according to the operation.

When it is detected that the user performs an operation of designating the camera area AR3, the control unit 11 causes the processing to proceed from step S104 to step S105. In this case, the control unit 11 performs control such that the image captured by the imaging device 1 corresponding to the frame W designated by the user in the camera area AR3 is displayed in the main area AR1. For example, in a case where the user performs an operation of designating the frame W in which the image captured by the imaging device 1C is displayed, the control unit 11 instructs the image processing unit 12 to display the image S1 of the input image PinC in the main area AR1.

Note that it is conceivable that the image in the camera area AR3 is not changed.

The control unit 11 repeats the processing corresponding to the user operation as described above until it is determined in step S106 that the control is ended. As an end timing, for example, a delivery end timing, a timing when performance of a specific musical piece ends, or the like is assumed.

At the end timing, the control unit 11 performs the end processing of step S110 to end the series of processing. In this end processing, it is conceivable to store the number of times of user operation and history information of operation content in the DB 11b in association with the user. Furthermore, it is also conceivable to store the final display frequency value of each mode to be described next with reference to Fig. 8 in the DB 11b in association with the user.

The control unit 11 performs the processing of Fig. 8 together with the above-described processing of Fig. 7.

In step S200 of Fig. 8, a mode is selected according to the user operation.

For example, the control unit 11 performs control so as to request the user to perform a mode selection operation on the user terminal 3 at an appropriate timing such as before the start of delivery or before the start of performance of a specific musical piece. For example, the modes M1 and M2 are presented, and the user is requested to make a selection. In step S200, a corresponding user operation is acquired, and a mode designated by the user is initially selected.

In step S201, the control unit 11 sets the display frequency value of each mode according to the mode selected above.

For example, in a case where the user selects the mode M1, the display frequency value of the mode M1 is set to "90", and the display frequency value of the mode M2 is set to "10". This means that, for example, in 100 seconds, the image selected by the algorithm of the mode M1 is displayed for a total of 90 seconds, and the image selected by the algorithm of the mode M2 is displayed for a total of 10 seconds.

In step S202, the control unit 11 selects a mode for display in the recommendation area AR2 according to the display frequency value at that time, and issues an instruction to the image processing unit 12.

For example, the display frequency values of the mode M1 and the mode M2 are set at the ratio of 90:10 as described above, and the processing of Fig. 8 proceeds to step S202 every unit time. In this case, the control unit 11 selects the mode M1 nine times out of 10 times of reaching step S202, and instructs the image processing unit 12 to display the image selected by the mode M1 at that time in the recommendation area AR2. Furthermore, the control unit 11 selects the mode M2 one time out of 10 times of reaching step S202, and instructs the image processing unit 12 to display the image selected by the mode M2 at that time in the recommendation area AR2.

Note that the image switching by the modes M1 and M2, that is, the switching timing of the image S2 based on the switching of the input images PinA, ..., and Pin(n) is not necessarily constant, and corresponds to the progress of the musical piece or the like. Therefore, in the above description, for example, the image of the recommendation area AR2 is not switched every time the processing of step S202 is performed every unit time, but the mode applied to the recommendation area AR2 is selected at the time of the processing of step S202. For example, at the timing when the mode M2 is applied, when the image displayed in the case of the mode M2 is different from the image of the recommendation area AR2 at that time, the image is switched. Furthermore, during the period of the mode M2, when the progress of the musical piece reaches the timing when the image switching is performed by the algorithm of the mode M2, the image switching is performed.

That is, for the mode applied to the recommendation area AR2, the modes M1 and M2 are selectively applied in the processing of step S202 at a ratio corresponding to the display frequency value for each unit time, for example. Then, during a period in which the mode M1 is applied, an image to be selected on the basis of the algorithm of the mode M1 is displayed in the recommendation area AR2, and during a period in which the mode M2 is applied, an image to be selected on the basis of the algorithm of the mode M2 is displayed in the recommendation area AR2.

Therefore, when the display frequency value is 90:10 as described above, in the recommendation area AR2, the state is in a display state in which image switching is mainly performed by the mode M1 and image switching is occasionally performed by the mode M2.

In this example, the mode M1 is preferentially performed in order to respect the selection by the user. That is, when the user first selects the mode M1, the image based on the mode M1 is basically displayed in the recommendation area AR2. However, by occasionally performing image display based on the mode M2, image switching in a mode not selected by the user is also presented to the user.

Here, as described in Fig. 7, during delivery, the user can arbitrarily perform an operation for the recommendation area AR2 or the camera area AR3, and the image displayed in the main area AR1 is switched. In the processing of Fig. 8, the display frequency value is updated according to such a user operation.

In step S203, the control unit 11 determines whether or not the user has selected an image other than that in the main area AR1. The operation of selecting an image here is an operation of designating the recommendation area AR2 or the camera area AR3, and whether such an operation is performed is determined.

When the user operation is detected, the control unit 11 proceeds from step S203 to step S207, and when the user operation is an operation of designating the recommendation area AR2, the control unit proceeds to step S208. In step S208, the control unit 11 determines a mode applied to the recommendation area AR2 at the time of the operation, and updates the display frequency value of the mode to be increased.

For example, when the operation is performed during the period in which the mode M1 is applied to the recommendation area AR2, the display frequency value of the mode M1 is increased and the display frequency value of the mode M2 is decreased. The increase width may be a fixed value or a variable value. For example, when the display frequency value increases by five points, in a case where the ratio of the display frequency values immediately before the user selects an image other than the main area in S203 is M1:M2 = 90:10, the ratio of the display frequency values after the user performs the operation during the period in which the mode M1 is applied to the recommendation area AR2 is changed to M1:M2 = 95:5.

Furthermore, when the operation is performed during the period in which the mode M2 is applied to the recommendation area AR2, the display frequency value of the mode M2 is increased. At this time, the display frequency value of the mode M1 may be decreased. For example, M1:M2 = 90:10 is set to M1:M2 = 85:15.

Note that for the sake of explanation, the display frequency value is increased or decreased by the ratio point. However, the display frequency value may simply increase one of the points, and as a result, the display frequency value is only required to be updated such that the ratio of the display in each mode changes.

On the other hand, in a case where the user operation is not an operation of designating the recommendation area AR2, the control unit 11 proceeds from step S207 to step S209. That is, this is a case where an operation of selecting a certain frame W in the camera area AR3 is performed.

In this case, the control unit 11 confirms whether or not the selected image is an image displayed in the mode selected in step 5200.

For example, the mode selected in step S200 is the mode M1.
Then, the input image PinB is selected in the mode M1 at the timing of the user's operation. At this time, when the user designates the frame W of the input image PinB that is an image of the imaging device 1B in the camera area AR3, it can be said that the image selected from the camera area AR3 is an image displayed in the mode selected in step S200.

In such a case, the control unit 11 proceeds to step S210 and increases the display frequency value for the mode selected by the user in step S200. For example, when the user selects the mode M1 and the image selected from the camera area AR3 is an image suitable for the mode M1, the display frequency value of the mode M1 is increased. At this time, the display frequency value of the mode M2 may be decreased. For example, M1:M2 = 90:10 is set to M1:M2 = 95:5.

On the other hand, when the image selected by the user from the camera area AR3 is an image not corresponding to the mode selected by the user at the time of the operation, the control unit 11 proceeds to step S211 and increases the display frequency value corresponding to a mode other than the mode selected by the user in step S200. For example, when the user selects the mode M1 and the image selected from the camera area AR3 is not an image suitable for the mode M1, the display frequency value of the mode M2 is increased. The display frequency value of the mode M1 may be decreased. For example, M1:M2 = 90:10 is set to M1:M2 = 85:15.

During a period in which the user operation for the recommendation area AR2 or the camera area AR3 is not detected, the control unit 11 proceeds from step S203 to step S204, and confirms whether or not a predetermined time has elapsed since the previous image selection by the user (that is, the operation for the recommendation area AR2 or the camera area AR3). For example, a predetermined time is 10 minutes or the like.

When the predetermined time has not elapsed, the control unit 11 returns to step S202.

In a case where the image selection operation has not been performed for a predetermined time, the control unit 11 proceeds to step S205 and confirms whether or not a mode related to the user selection is applied to the main area AR1 at that time. When the mode is applied, the control unit 11 proceeds to step S212 and increases the display frequency value for the mode selected by the user in step S200. For example, when the user selects the mode M1 and the mode M1 is applied to the main area AR1 at that time, the display frequency value of the mode M1 is increased and the display frequency value of the mode M2 is decreased.

In the main area AR1, for example, the image is a fixed image initially, or an image based on a mode set on the basis of the past history is displayed. Alternatively, when the mode of the recommendation area AR2 is applied in step S103 in Fig. 7, display based on a certain mode may be performed in the main area AR1. The case of proceeding to step S212 in Fig. 8 is a case where the mode selected by the user in step S200 is continuously applied to the main area AR1 for a predetermined time. That is, it can be said that the user views the image in consideration of appropriate image switching control according to the mode. In step S200, the display frequency value for the mode selected by the user is increased.

On the other hand, in a case where the image selection operation has not been performed for the predetermined time, and it is determined in step S205 that the mode related to the user selection is not applied to the main area AR1 at that time, the control unit 11 proceeds to step S206, and increases the display frequency value for the mode other than the mode selected by the user in step S200. For example, when the user selects the mode M1 and the operation has not been performed for a predetermined time while the mode M2 is applied to the main area AR1 at that time, it can be estimated that the user's interest in the mode M1 is weakened. Therefore, for example, the control unit 11 increases the display frequency value of the mode M2 and decreases the display frequency value of the mode M1.

As described above, the display frequency value is updated according to the user's operation or no operation for a predetermined time or more, and the processing returns to step S202 via step S220.

In step S202, as described above, display is performed in the recommendation area AR2 while the mode is selected according to the display frequency value, but the frequency with which the modes M1 and M2 are applied changes when the display frequency value is updated.

For example, when the display frequency value of the mode M2 is high, there are more opportunities to perform image switching by the mode M2 in the recommendation area AR2.

At the end timing as illustrated in Fig. 7, the control unit 11 ends the processing of Fig. 8 from step S220.

As illustrated in Fig. 8, the update of the display frequency value and the mode application control of the recommendation area AR2 according to the display frequency value are performed.

Therefore, the switching control of the image displayed in the recommendation area AR2 converges to a state suitable for the user according to the operation or the viewing state of the user.

Note that a period during which the same image is displayed in the main area AR1 and the recommendation area AR2 may occur by the above-described control of Figs. 7 and 8.

However, in the recommendation area AR2, a state in which the same image is sequentially displayed in the main area AR1 and the recommendation area AR2 is canceled since one mode is not continuously applied or the user's operation is performed irregularly.

In the above-described example, the modes M1 and M2 are used, but three or more modes may be used. For example, an example of using the modes M1, M2, and M3 and an example of using the modes M1, M2, and M4 can be considered. Furthermore, an example of using the modes M1, M2, M3, and M4 is also conceivable.

In such a case, there are a plurality of modes other than the user-selected mode in step S200, and according to this, the display frequency value is only required to be updated. For example, in a case where the modes M1, M2, and M4 are selectable and the mode M1 is a mode selected by the user, it is conceivable to set the ratio of the initial display frequency value as the mode M1:M2:M4 = 80:10:10.

Furthermore, in steps S211 and S206, it is conceivable to determine the corresponding mode, increase the display frequency value of the mode, and increase the display frequency value equally for a plurality of modes other than the mode selected by the user when all of the modes are not applied.

Furthermore, in the first embodiment described above, it is conceivable to restrict the update of the display frequency value such that the display frequency values of other modes except one mode do not become "zero". In this way, a plurality of modes can be always applied to the recommendation area AR2 in a time-division manner although there is a difference in frequency. Such control is also conceivable in second and third embodiments to be described later.

### <4. Second embodiment>

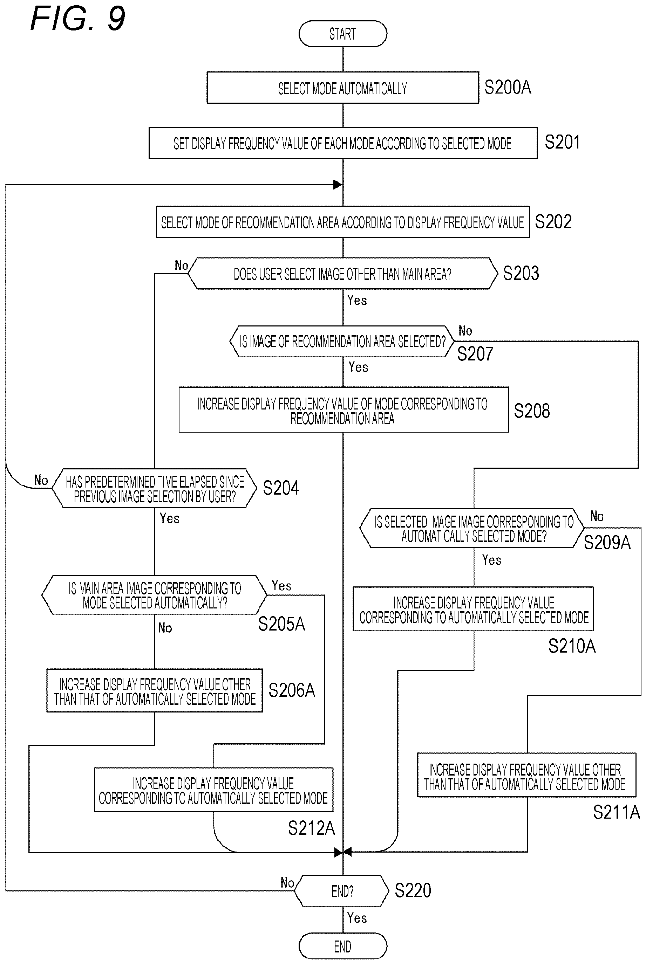

Fig. 9 illustrates a processing example of the control unit 11 according to a second embodiment. Note that the processing of Fig. 7 is similarly performed in the second embodiment. The second embodiment is an example in which the control unit 11 performs the processing of Fig. 7 and performs the processing of Fig. 9 instead of Fig. 8. In Fig. 9, the processing similar to that in Fig. 8 is denoted by the same step numbers, and overlapping description is avoided.

The processing example of Fig. 9 is different from that of Fig. 8 in that the control unit 11 automatically selects a mode in step S200A. That is, in Fig. 9, instead of the user operation, the control unit 11 selects a mode estimated to be suitable for the delivery destination user in step S200A.

For example, the control unit 11 automatically selects a mode estimated to be applied to the current delivery content by the user by using, as a determination material, the past selection history of the user, the history of the mode applied to the main area AR1 in the delivery to the user, the history of the mode selected by the user for the same past musical piece or the like, the history of the display frequency value of each mode in the past delivery, or the like.

Alternatively, a mode selected by not only the user but also many users may be selected, or a mode that is often applied may be selected according to the event or details of the content.

Moreover, the control unit 11 may randomly select a mode without using the history of the user, the selection situation of other users, or the like.

Processing in subsequent steps S201, S202, S203, S204, S207, S208, and S220 is similar to those in Fig. 8.

In a case where the user performs an operation of selecting an image in the camera area AR3, the control unit 11 determines in step S209A whether or not the image is an image corresponding to the mode automatically selected in step S200A. The "corresponding image" means that the selected image is an image displayed in the mode selected in step S200A as described in step S209 of Fig. 8.

Then, when the image corresponds to the automatically selected mode, the control unit 11 increases the display frequency value of the automatically selected mode in step S210A.

On the other hand, when the image corresponds to the automatically selected mode, the control unit 11 increases the display frequency value of a mode other than the automatically selected mode in step S211A.

Furthermore, in a case where the operation of designating the recommendation area AR2 and the camera area AR3 is not performed for a certain period of time or more, the control unit 11 determines in step S205A whether or not the image of the main area AR1 at that time is an image corresponding to the mode automatically selected in step S200A.

Then, when the image corresponds to the automatically selected mode, the control unit 11 increases the display frequency value of the automatically selected mode in step S212A.

On the other hand, when the image does not correspond to the automatically selected mode, the control unit 11 increases the display frequency value of a mode other than the automatically selected mode in step S206A.

As illustrated in Fig. 9 above, an example of a case where the mode selection by the user is not performed first is conceivable. In this case, in the recommendation area AR2, image switching in the automatically selected mode is preferentially performed at the beginning. Depending on the user's operation, the mode may transition to a state in which another mode is prioritized.

### <5. Third embodiment>

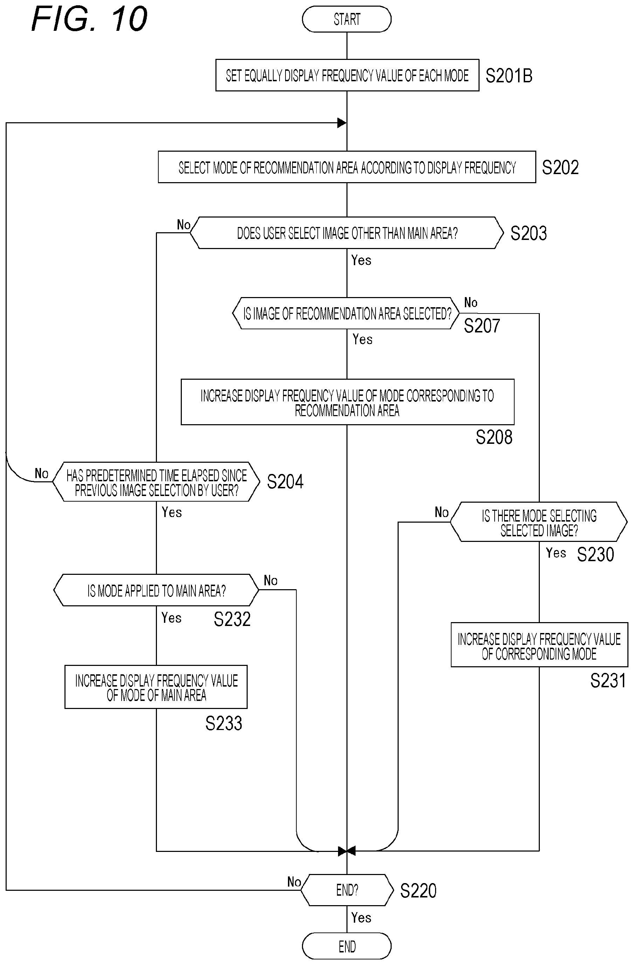

Fig. 10 illustrates a processing example of the control unit 11 according to a third embodiment. Note that the processing of Fig. 7 is similarly performed in the third embodiment. That is, the control unit 11 executes the processing of Fig. 7 and performs the processing of Fig. 10 instead of Fig. 8. In Fig. 10, the processing similar to that in Fig. 8 is denoted by the same step numbers, and overlapping description is avoided.

The third embodiment of Fig. 10 is an example in which an initial mode is not selected as in step S200 of Fig. 8 or step S200A of Fig. 9.

In step S201B, the control unit 11 equally sets the initial display frequency value of each mode. For example, in a case where the modes M1 and M2 are used, the display frequency value is set to 50:50.

Therefore, in step S202, initially, control is performed such that image switching in the mode M1 and image switching in the mode M2 are performed at substantially the same frequency in the recommendation area AR2.

Thereafter, the control unit 11 performs the processing of steps S203, S204, S207, S208, and S220 as illustrated in Fig. 8.

In a case where the user performs an operation of selecting an image in the camera area AR3, the control unit 11 proceeds from step S207 to step S230, and determines whether or not the selected image is an image corresponding to a certain mode at that time, that is, an image selected at that time by a certain mode. Then, when the corresponding mode exists, the control unit 11 increases the display frequency value of the corresponding mode in step S231.

Furthermore, in a case where the operation of designating the recommendation area AR2 and the camera area AR3 is not performed for a certain period of time or more, the control unit 11 proceeds from step S204 to step S232, and determines whether or not any of the modes is applied to the image of the main area AR1 at that time.

When the mode is applied, the processing proceeds to step S233, and the control unit increases the display frequency value of the mode applied to the main area AR1.

As described above, initially, in the recommendation area AR2, image switching is performed by applying each mode substantially equally, but the frequency of applying the mode desired by the user gradually increases by updating the display frequency value according to the user's operation or no operation for a certain period of time.

### <6. GUI example>

Although a GUI example applicable to each of the embodiments described above is illustrated in Fig. 6, another GUI example will be described.

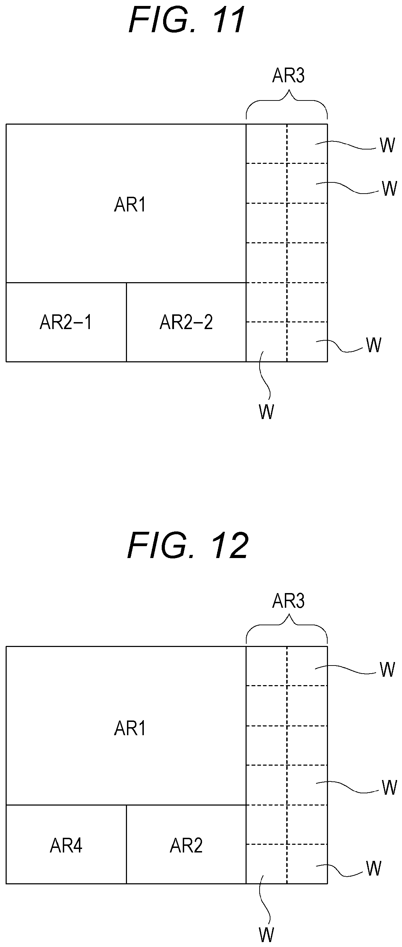

Fig. 11 illustrates an example including a main area AR1, recommendation areas AR2-1 and AR2-2, and a camera area AR3. By providing two recommendation areas AR2-1 and AR2-2, images based on various modes can be displayed at different frequency values, and images based on various modes can be introduced to the user.

For example, in a case where the modes M1, M2, M3, and M4 are used, the mode M1 is first selected in step S200 of Fig. 8 or step S200A of Fig. 9.

In this case, in steps S201 in Figs. 8 and 9, an example is conceivable in which the mode M1 is applied with a high frequency and the mode M4 is applied with a low frequency in the recommendation area AR2-1, and the modes M2 and M3 are applied with an equal frequency in the recommendation area AR2-2.

Furthermore, for example, in the case of using the modes M1, M2, M3, and M4, and in Fig. 10, in step S201B, an example is conceivable in which the modes M1 and M2 are applied with an equal frequency in the recommendation area AR2-1, and the modes M3 and M4 are applied with an equal frequency in the recommendation area AR2-2.

Fig. 12 is the GUI example in which a setting area AR4 is provided in addition to the main area AR1, the recommendation area AR2, and the camera area AR3.

In the setting area AR4, display enabling a setting operation of the following contents is performed.

### · Mode selection

For example, in a case where the user is requested to select a mode in step S200 or the like in Fig. 8, GUI display that can be operated by the user is performed.

### · Screen layout setting

For example, GUI display is performed such that the main area AR1 can be displayed larger, only the main area AR1 and recommendation area AR2 can be displayed with the camera area AR3 not displayed, or the layout of each area can be set/changed.

### · Audio setting

GUI display is performed, the GUI display being operated such that a sound volume is adjusted or a sound volume from a specific microphone is increased or decreased. Display for sound quality adjustment, for example, equalizer display may be performed.

### · Display of time information

For example, an elapsed time from the start of a music live show or a specific musical piece, an elapsed time from the start of viewing, and the like can be confirmed.

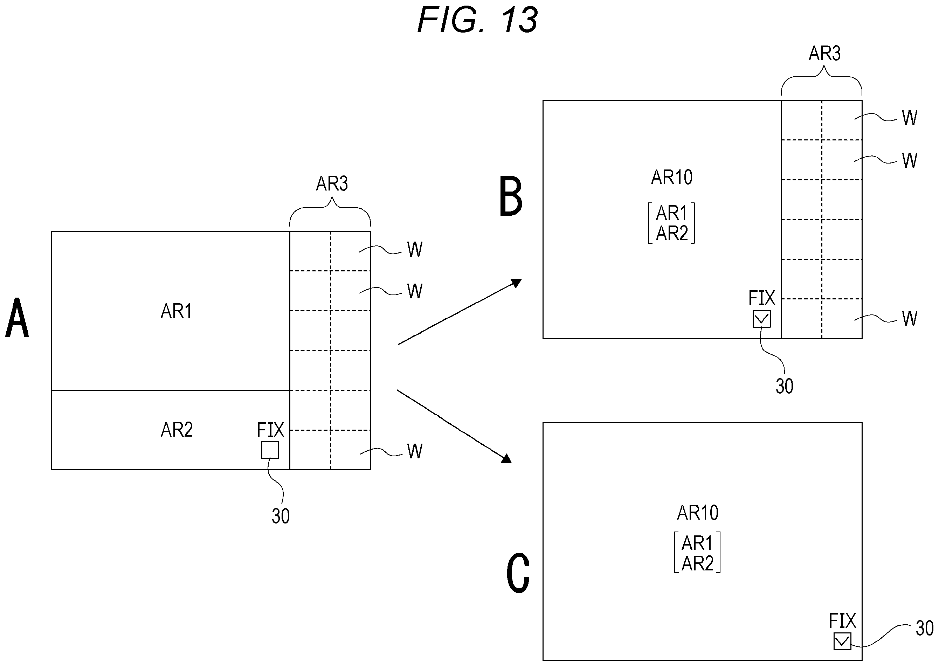

Fig. 13A illustrates an example of preparing a check box 30 for display fixation in the recommendation area AR2.

For example, when the user wants to continue the display in the recommendation area AR2 and view in the main area AR1, the user checks the check box 30.

Accordingly, the main area AR1 and the recommendation area AR2 are shared. For example, as illustrated in Fig. 13B, the GUI screen includes a sharing area AR10 formed by integrating the main area AR1 and the recommendation area AR2 into one area, and the camera area AR3.

Alternatively, as illustrated in Fig. 13C, the main area AR1 and the recommendation area AR2 are integrated into one area, the camera area AR3 is not displayed, and the sharing area AR10 is displayed on the entire screen.

Figs. 13B and 13C illustrate that the main area AR1 and the recommendation area AR2 are shared when the check box 30 is checked on and displayed.

In the sharing area AR10 of Figs. 13B and 13C, it is conceivable to perform image display to which the mode applied to the recommendation area AR2 is fixedly applied at the time of check on.

That is, in a case where the user thinks that the image subjected to the switching control in the recommendation area AR2 is preferable, by performing a check-on operation of the check box 30, the user can view the image in the mode continuously in the sharing area AR10.

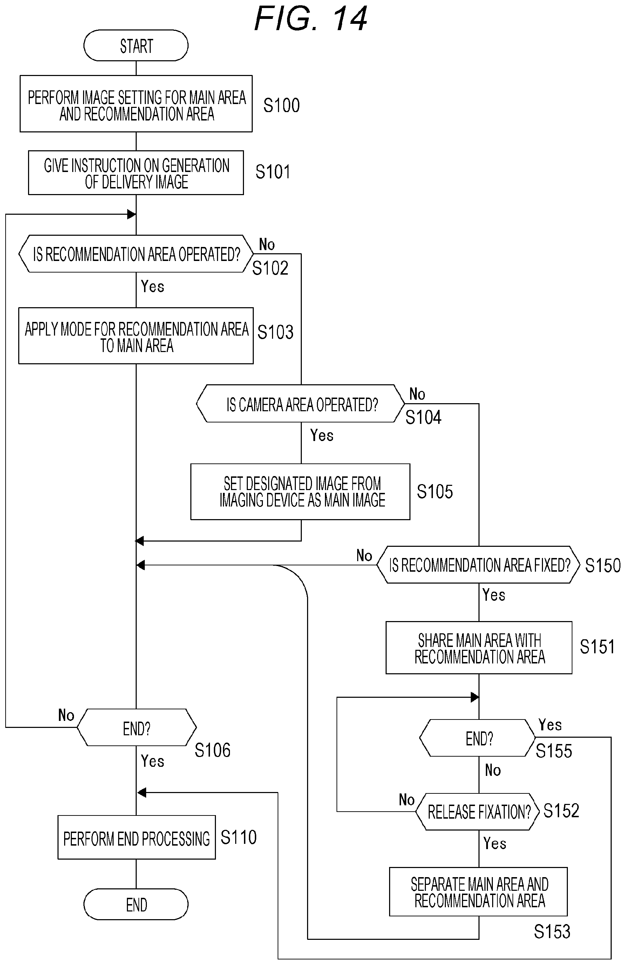

In a case where such area sharing is performed, the control unit 11 performs processing as illustrated in Fig. 14 instead of the processing of Fig. 7.

Steps S100 to S106 and step S110 in Fig. 14 are similar to those in Fig. 7. In the processing of Fig. 14, the control unit 11 monitors the recommendation area fixing operation in step S150 in addition to monitoring the operations in steps S102 and S104.

The recommendation area fixing operation in step S150 is an operation of fixing the main area AR1 in the mode of the recommendation area AR2, and is, for example, an operation of checking on the check box 30 in the state of Fig. 13A.

When the operation is detected, the control unit 11 proceeds to step S151, and performs control to display the sharing area AR10 sharing the main area AR1 and the recommendation area AR2 as illustrated in Fig. 13B or 13C. In this case, the mode applied in the recommendation area AR2 is applied to the sharing area AR10, and then, the state is continued. Thus, in a case where the user performs a check-on operation when the desired image is displayed in the recommendation area AR2, the user can view the image in the mode at that time in the sharing area AR10 which is a wide area on the screen.

Note that in a case where the check-on operation is performed, a mode preferentially applied in the recommendation area AR2 at the time of the operation, that is, a mode having the highest display frequency value in the first, second, and third embodiments may be applied to the sharing area AR10, instead of the mode applied to the recommendation area AR2 at the time of the operation. Thus, in a case where the user performs the check-on operation when the image of the recommendation area AR2 so far often matches the user's preference, viewing based on a mode desired by the user can be performed in the sharing area AR10.

In step S155, the control unit 11 determines an end timing similarly to step S106.

After the display of the sharing area AR10 is started, the control unit 11 monitors the fixing release operation in step S152 until it is determined to end the processing in step S155. The fixing release operation is, for example, an operation of checking off the check box 30 in the state of Fig. 13C.

When the fixing release operation is detected, the control unit 11 releases the sharing of the main area AR1 and the recommendation area AR2 in step S153, and returns to, for example, the display state of Fig. 13A. Then, the processing proceeds to a monitoring loop of the operations in steps S102 and S104. As a result, the image in the main area AR1 is returned to a state of being capable of being changed by the user.

Note that although not illustrated in Fig. 14, in a case where the camera area AR3 is left when the sharing area AR10 is displayed as illustrated in Fig. 13B, the fixing release operation in step S152 may be monitored and the operation for the camera area AR3 may be monitored. In the case of the operation for the camera area AR3, it is conceivable that an image of the imaging device 1 corresponding to the operation is displayed in the sharing area AR10. Alternatively, the processing proceeds to step S153 in response to the operation for the camera area AR3 to release the sharing, and then the image of the imaging device 1 according to the operation may be displayed in the main area AR1. Moreover, an example is also conceivable in which the operation for the camera area AR3 may be invalidated when the sharing area AR10 is displayed.

For example, in the above-described processing, the user can arbitrarily fix the mode of the main area AR1 to the mode applied in the recommendation area AR2, and can view the image in a wide area with the mode fixed.

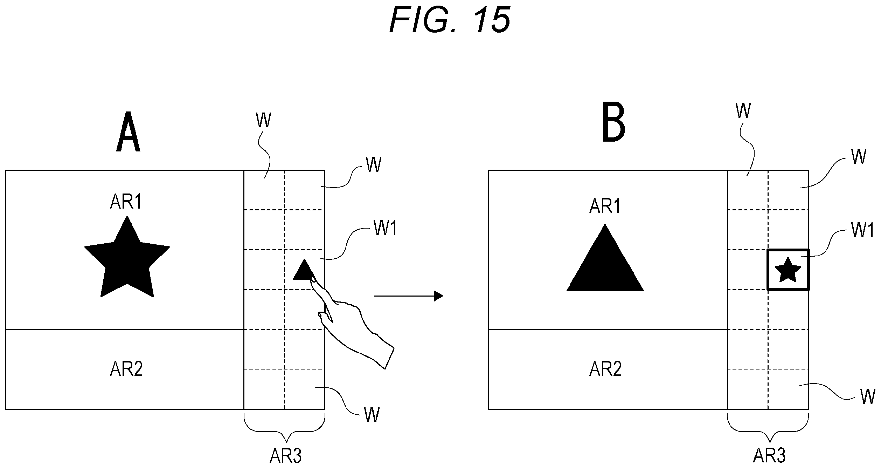

Next, Figs. 15A and 15B illustrate an example of a case where any one of the frames W of the camera area AR3 is selected as the image of the main area AR1.

In Fig. 15A, for example, in the main area AR1, image display is performed in a state in which switching control is performed by a certain mode. In each frame W of the camera area AR3, an image (image S3) captured by each of the imaging devices 1A, ..., 1(n) is displayed.

In this case, the user performs an operation of selecting a frame W1 in the camera area AR3.

In that case, in the processing of step S105 of Fig. 7, the image captured by the imaging device 1 corresponding to the selected frame W1 is displayed in the main area AR1 as illustrated in Fig. 15B.

In the above-described embodiment, it has been described that the image of the camera area AR3 is not changed in this case, but in the example of Fig. 15B, the image content displayed in the main area AR1 so far is displayed in the frame W1. That is, the image contents of the frame W1 and the main area AR1 are exchanged.

In this manner, in a case where the image of the main area AR1 is displayed in the frame W1 of the camera area AR3, this is clearly indicated.

The image in the main area AR1 before exchange is an image that is subjected to switching control in a certain mode. Therefore, the image captured by one imaging device 1 does not continue.

Therefore, in the state of Fig. 15B, each frame of the camera area AR3 displays the image captured by a certain imaging device 1, but only the frame W1 displays the images captured by a plurality of the imaging devices 1 in a time-division manner, the images being switched in a certain mode. That is, the other frames display the images indicating a different meaning.

Therefore, the frame W1 is displayed in a mode different from that of the other frames W by, for example, making the frame to be displayed in a specific color, making the frame thick, or making the frame to be displayed at a high luminance, and exchanging the image with an image of the main area AR1 is clearly indicated to the user.

As a result, it is easy to understand that only the frame W1 in the camera area AR3 is not an image captured by a specific imaging device 1, such as another frame W.

In a case where the user desires to return the image to the original image of the main area AR1, the user is only required to perform an operation of selecting the frame W1 displayed in such a specific display mode. Therefore, the state is returned to the state of Fig. 15A.

### <7. Fourth embodiment>

A fourth embodiment will be described. The GUI screen is an example of Fig. 6.

The fourth embodiment is an example in which the mode applied in the recommendation area AR2 is switched through the user's operation or the like, but is different from the first, second, and third embodiments in which a plurality of the modes is applied while the frequency is adjusted.

As the switching control mode, the modes M1, M2, M3, M4, and M5 are used, but some modes, for example, the modes M1, M2, and M3 can be selected at first.

Schematically, the processing transitions as shown in next first to fourth stages.

### · First stage: Reference mode selection

The user selects a favorite mode from among the modes M1, M2, and M3, and sets the selected mode as a reference mode.

### · Second stage: Reference mode application and operation correspondence

At the time of delivery, in the main area AR1, the reference mode selected in the first stage is applied and image switching is performed. In the recommendation area AR2, an unselected mode, for example, a mode with a smaller mode number is applied and image switching is performed.

Furthermore, when the user operates the recommendation area AR2, the modes applied in the main area AR1 and the recommendation area AR2 are switched.

When the user operates the camera area AR3, an image of the frame W selected in the camera area AR3 (an image captured by a certain imaging device 1) is displayed in the main area AR1.

### · Third stage: determination processing

At a certain determination timing during delivery, determination processing of determining a mode suitable for the user is performed according to the user's selection operation and a viewing state. In this case, the modes M4 and M5 are added to the modes M1, M2, and M3, and a suitable mode is determined from among the modes. When necessary, the reference mode is updated according to the determination result. The updated reference mode is applied to the main area AR1.

### · Fourth stage: Redetermination processing

During the delivery after the determination, the determination processing is performed again at a certain determination timing, and the reference mode is updated according to the determination result. The updated reference mode is applied to the main area AR1. Thereafter, the redetermination processing may be performed a plurality of times until the processing ends.

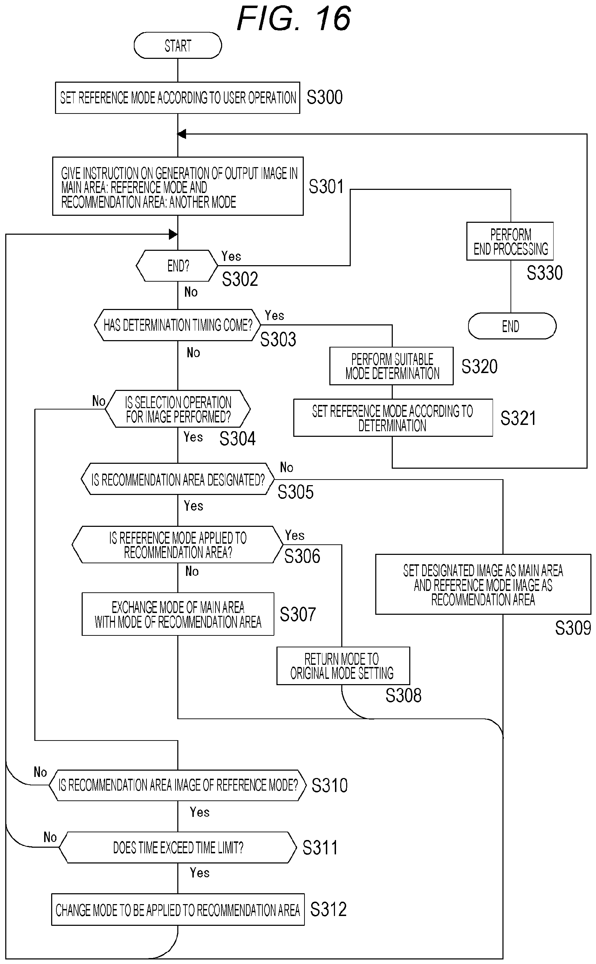

For example, an example of performing the control processing of each stage as described above will be described with reference to Fig. 16.

In step S300, the control unit 11 sets the reference mode according to a user operation. For example, the control unit 11 performs control so as to request selection of any one of the modes M1, M2, and M3 on the GUI screen of the user terminal 3, and detects a user's operation input thereto. Then, the mode designated by the user is set as the reference mode.

Such reference mode setting is processing of the first stage. Note that, regardless of user selection, for example, as described in the second embodiment, a mode suitable for the user may be automatically selected and set as the reference mode.

In the following description, it is assumed that the user selects the mode M1 and initially sets the mode M1 to the reference mode.

Subsequently, the processing of the second stage is performed after step S301.

In step S301, the control unit 11 sets display control of each area, and controls the image processing unit 12 such that the delivery image PO corresponding thereto is generated.

The main area AR1 is an image to which the reference mode is applied. For example, the mode is the mode M1.

The recommendation area AR2 is an image to which a mode other than the reference mode is applied. For example, other than the reference mode, a mode with the smallest mode number is selected. For example, the mode is the mode M2.

Note that in the camera area AR3, as in the above-described embodiment, the image captured by each imaging device 1 is displayed in each frame W.

In step S302, the control unit 11 monitors the end timing. This is similar to that in step S110 of Fig. 7.

In step S303, the control unit 11 confirms whether or not the determination timing has come. This is processing of confirming whether or not it is a timing to perform the above-described processing of the third stage or processing of the fourth stage.

When these timings do not come, the processing of the second stage is continued.

In step S304, the control unit 11 confirms whether or not the user has performed an image selection operation. The image selection operation is an operation of designating the recommendation area AR2 or an operation of designating a certain frame W of the camera area AR3 as in the embodiment described above.

In a case where the image selection operation is detected, the control unit 11 branches the processing depending on whether the operation is for the recommendation area AR2 or the camera area AR3 in step S305.

In a case where the recommendation area AR2 is operated, the control unit 11 confirms whether or not the reference mode is applied to the recommendation area AR2 at that time in step S306.

When the reference mode is applied to the main area AR1, the control unit 11 proceeds to step S307 and switches the modes to be applied to the main area AR1 and the recommendation area AR2.

For example, in a case where the mode M1 has been applied to the main area AR1 and the mode M2 has been applied to the recommendation area AR2, the mode is switched to a state in which the mode M2 is applied to the main area AR1 and the mode M1 is applied to the recommendation area AR2.

The reason why this operation is performed is to cause the display performed in the recommendation area AR2 so far to be performed in the main area AR1 since the user has performed the operation to view the image of the recommendation area AR2.

On the other hand, in the main area AR1, the image is initially displayed by applying the reference mode, and this is the mode selected by the user. Therefore, the display in the reference mode is continued in the recommendation area AR2 instead of the non-display of the image in the reference mode.

As described above, since the mode applications of the main area AR1 and the recommendation area AR2 are switched, when the user performs an operation of designating the recommendation area AR2 again in a state in which the reference mode is applied to the recommendation area AR2, the control unit 11 proceeds from step S306 to step S308.

In this case, the control unit 11 returns to the mode setting before switching. For example, in step S308, the control unit 11 returns the state to a state in which the display based on the reference mode (for example, the mode M1) is performed in the main area AR1 and the display based on the mode (for example, the mode M2) applied before the switching in step S307 is performed in the recommendation area AR2.

In a case where the image selection operation by the user is detected, and the operation is an operation of designating a certain frame W in the camera area AR3, the control unit 11 proceeds to step S309, causes the designated image to be displayed in the main area AR1, and applies the reference mode to the recommendation area AR2.

For example, in a case where an image (low-resolution image S3) based on the input image PinB of the imaging device 1B is selected in the camera area AR3, an image (high-resolution image S1) based on the input image PinB of the imaging device 1B is displayed in the main area AR1. Then, by applying the mode M1 of the reference mode to the recommendation area AR2, the image switching performed in the main area AR1 so far is performed in the recommendation area AR2.

This is particularly a case where the user wants to focus on an image captured by a specific imaging device 1, and thus the image captured by the specific imaging device 1 is displayed with high resolution in the main area AR1.

On the other hand, in the main area AR1, the image is initially displayed by applying the reference mode, and this is the mode selected by the user. Therefore, the display in the reference mode is continued in the recommendation area AR2 instead of the non-display of the image in the reference mode.

Note that the reference mode may be applied to the recommendation area AR2 in the processing of step S307 before the operation of designating a certain frame W in the camera area AR3 is performed.

For example, in a case where the image based on the input image PinB of the imaging device 1C is selected in the camera area AR3 by the user in this state, in step S309, the image based on the input image PinC of the imaging device 1C is displayed in the main area AR1, and the recommendation area AR2 is in the reference mode. Therefore, the display is only required to continue.

In this manner, the user can display an arbitrary image in the main area AR1 by operating the camera area AR3.

When the user performs an operation of designating the recommendation area AR2 again while an image captured by a certain imaging device 1 is displayed in the main area AR1 as described above, the control unit 11 proceeds from step S306 to step S308.

In this case, the control unit 11 returns the main area AR1 and the recommendation area AR2 to the mode setting before the display of the image in the main area AR1 and the display of an image of a certain frame W in the camera area AR3.

For example, in step S308, the control unit 11 returns the state to a state in which the display based on the reference mode (for example, the mode M1) is performed in the main area AR1 and the display based on the mode (for example, the mode M2) applied originally is performed in the recommendation area AR2.

As understood in the above-described processing, basically, the image of the main area AR1 is an image that is subjected to the switching control by the reference mode. Furthermore, the image of the recommendation area AR2 is an image that is subjected to the switching control by a certain mode other than the reference mode.

An image switched by the mode initially applied to the recommendation area AR2 is displayed in the main area AR1 through the user's operation.

Furthermore, when the user designates an image in the camera area AR3, the image captured by the corresponding imaging device 1 is displayed in the main area AR1.

However, when the main area AR1 is not displayed in the reference mode, the reference mode is applied to the recommendation area AR2. Therefore, the user performs an operation of designating the recommendation area AR2 to return the state to the original state, that is, a state in which display based on the reference mode is performed in the main area AR1 and display based on another mode is performed in the recommendation area AR2.

Here, when the user operation is not detected, the control unit 11 proceeds from step S304 to step S310 and confirms whether or not the reference mode is applied in the recommendation area AR2.

When the reference mode is not applied to the recommendation area AR2, the processing returns to step S302.

In a state in which the reference mode is applied to the recommendation area AR2, the control unit 11 proceeds to step S311 and confirms whether or not a predetermined time elapses in the state and exceeds the time limit.

When the time does not exceed the time limit, the control unit 11 returns to step S302, but when the time exceeds the time limit, the control unit 11 proceeds to step S312.

The case where the state in which the reference mode is applied to the recommendation area AR2 continues for a predetermined time can be considered that the user does not think that image switching based on the reference mode is appropriate. Thus, in step S312, the control unit 11 changes the mode applied to the recommendation area AR2 at this time point, and changes the switching control method of "recommendation".

For example, in a case where the reference mode has been applied to the mode M1 and the mode M2 has been applied to the recommendation area AR2 initially, the mode M2 is applied in the main area AR1 or the image captured by a certain imaging device 1 is displayed at the time of step S312, and the mode M1 as the reference mode is applied to the recommendation area AR2.

In this case, for example, the control unit 11 changes the mode such that the mode M3 is applied to the recommendation area AR2. For example, the mode M2 is applied to the main area AR1 and the mode M3 is applied to the recommendation area AR2.

Alternatively, for example, an image captured by a certain imaging device 1 may be displayed in the main area AR1, and the mode M3 may be applied to the recommendation area AR2.

By switching the mode applied to the recommendation area AR2 in this manner, images in various switching control modes can be introduced to the user.

Thereafter, for example, in a case where the user performs an operation of designating the recommendation area AR2, the processing proceeds to step S307. For example, in a case where the mode M2 is applied to the main area AR1 and the mode M3 is applied to the recommendation area AR2, the mode M3 is applied to the main area AR1 and the mode M2 is applied to the recommendation area AR2 by mode switching in step S307.

Note that, at the time of the operation, for example, even when an image captured by a certain imaging device 1 is displayed in the main area AR1 and the mode M3 is applied to the recommendation area AR2, since step S307 is mode switching processing, the mode applied at the latest time is only required to be switched to be applied to the recommendation area AR2 before the image captured by the certain imaging device 1 is displayed in the main area AR1.

In the above-described steps S310, S311, and S312, a period during which various modes are applied to the recommendation area AR2 is obtained, but the determination in step S310 may be omitted as a modification example. That is, for example, even in a state in which the mode M1 is applied in the main area AR1 and the mode M2 is applied in the recommendation area AR2 in the initial state, when the time exceeds the time limit, the mode applied to the recommendation area AR2 may be changed to, for example, the mode M3 in step S312.

Furthermore, in a case where the time exceeds the time limit in a state where the reference mode is applied to the recommendation area AR2, in step S312, the reference mode itself may be changed instead of simply changing the mode applied to the recommendation area AR2.

The second stage processing has been described above. That is, each area is displayed in accordance with the user's operation or viewing state.

While such second stage processing is continued, the control unit 11 determines the determination timing in step S303 according to a certain condition, and performs the third stage processing.

For example, whether or not the determination timing has come is determined under the following conditions.
· The determination timing is set in a case where the user operation on the recommendation area AR2 or the camera area AR3 has been performed a predetermined number of times or more.
· The determination timing is set in a case where the operation frequency per unit time in the user operation on the camera area AR3 or the camera area AR3 is equal to or greater than a predetermined value.
· The determination timing is set in a case where a predetermined time has elapsed after the start of delivery.
· The determination timing is set in a case where the time when the reference mode is not applied to the main area AR1 is equal to or longer than a predetermined time, for example, equal to or longer than a predetermined time longer than the time exceeding the time limit in step S311.

In step S303, the control unit 11 confirms whether or not the determination timing is set according to any one of the conditions, a plurality of OR conditions, or a plurality of AND conditions.

Then, at the determination timing, the control unit 11 proceeds to step S320 and performs suitable mode determination.

In the suitable mode determination, it is determined which switching control mode among the modes M1, M2, M3, and M4 the user's viewing tendency is close to. When it cannot be determined that the mode is close to any of the modes, the mode M5 that is a random mode is set.

It is determined which switching control mode among the modes M1, M2, M3, and M4 the user's viewing tendency is close to according to the requirements below.
· The suitability depends on the length of time of the mode applied to the main area AR1.
· In a case where there is a mode for selecting an image, the user selects from the camera area AR3 at the time of the user selection, it is determined that the suitability of the mode is high.
· In a case where the user has not operated for a certain period of time after the operation, the mode selected through the user's operation or the mode in which the image selected by the user is selected has high suitability.
· The suitability is determined with the tendency of the content of the image selected by the user. For example, in a case where a specific subject is selected many times, the suitability for the mode M4 is high.

For example, when a mode suitable for the user is determined by the determination element as described above, the control unit 11 sets the reference mode according to the determination in step S321.

When the mode determined to be suitable by the determination is the same as the reference mode initially set in step S300, the setting of the reference mode is maintained.

When the mode determined to be suitable by the determination is different from the reference mode initially set in step S300, the setting is updated such that the mode determined to be suitable is set as the reference mode.

Then, in step S301, setting control for the delivery image to be output by the image processing unit 12 is performed.

The reference mode is applied in the main area AR1.

In the recommendation area AR2, another mode is applied. In this case, it is conceivable to apply a mode having the second highest suitability to the recommendation area AR2 in the determination result.

Therefore, thereafter, in the main area AR1, any one of the modes M1, M2, M3, M4, and M5 is applied and image display is performed.

In the recommendation area AR2, a mode different from that of the main area AR1 is applied and image display is performed.

There is no change in the camera area AR3.

Thereafter, the processing of step S302 and subsequent steps are similarly performed, and the image of each area is displayed according to the user's operation, the viewing state (no operation), or the like.

In a case where the control unit 11 determines to be the determination timing in step S303 again, the processing in steps S320 and S321 as the fourth stage, that is, the redetermination is performed.

The determination timing for the fourth stage in step S303 may be determined under the same condition as the determination timing for the third stage described above, or may be determined under different conditions.

Furthermore, as the element of the suitable mode determination in step S320, the same element as the above-described determination element in the third stage may be used to perform determination, or a different element may be used to perform determination.

The redetermination may also update the reference mode.

In the process of the above-described processing, when the end timing comes at a certain time point, the control unit 11 proceeds from step S302 to step S330, performs the end processing, and ends the series of processing.

In the end processing in this case, it is conceivable to store result information of the suitable mode determination for the user and the like in the DB 11b in association with the user.

In that case, when the same musical piece or the like is delivered to the corresponding user, it is conceivable to set the reference mode in step S300 according to a result of the past suitable mode determination.

The fourth embodiment has also been described with reference to the GUI example in Fig. 6, but the GUI examples in Figs. 11, 12, 13, and 15 can also be applied.

At first, three modes of the modes M1, M2, and M3 are used, but in a case where four or more modes are used up to the second stage, images in some modes other than the reference mode are displayed in the recommendation areas AR2-1 and AR2-2 as illustrated in Fig. 11.

Furthermore, as described in Figs. 13 and 14, in a case where the mode in the recommendation area AR2 is fixedly applied to the main area AR1 and the areas are shared, it is conceivable that the suitability of the fixed mode is highly evaluated in the suitable mode determination of step S320 of Fig. 16.

### <8. Fifth embodiment>

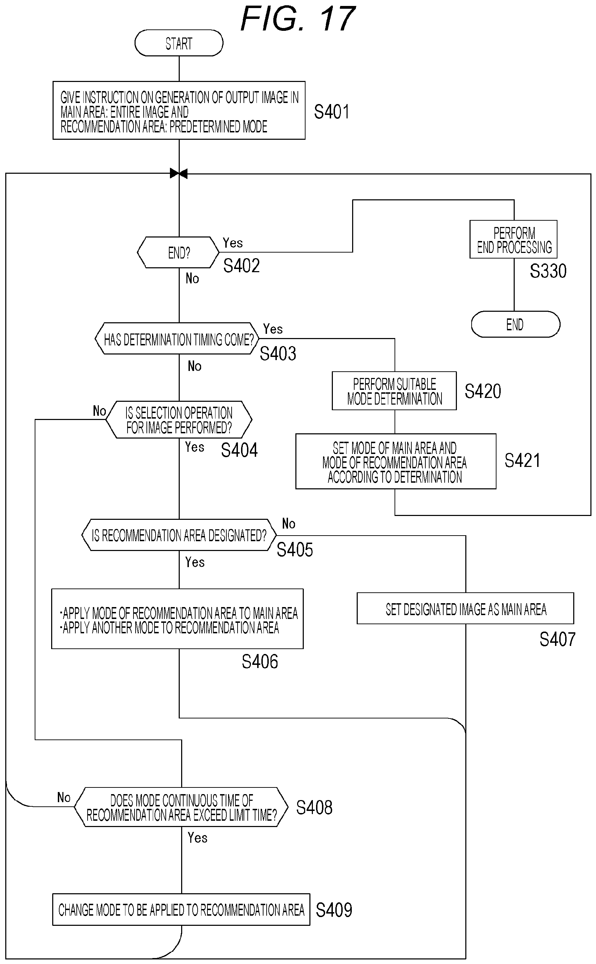

Fig. 17 illustrates a processing example according to a fifth embodiment. This processing example is an example in which the reference mode setting by user selection or the like as in the example of Fig. 16 is not performed.

As the switching control mode, the modes M1, M2, M3, M4, and M5 are used, but some modes, for example, the modes M1, M2, and M3 can be selected at first.

Schematically, the processing transitions in the next first and second stages.

### · First stage: Operation correspondence after start of delivery

At the time of delivery, a certain image, for example, an entire image is displayed in the main area AR1. In the recommendation area AR2, a certain mode, for example, a mode having a smaller mode number is applied and image switching is performed.

Furthermore, when the user operates the recommendation area AR2, the modes applied in the main area AR1 and the recommendation area AR2 are switched.

When the user operates the camera area AR3, an image of the frame W selected in the camera area AR3 (an image captured by a certain imaging device 1) is displayed in the main area AR1.

### · Second stage: determination processing and mode setting

At a certain determination timing during delivery, determination processing of determining a mode suitable for the user is performed according to the user's selection operation and a viewing state. In this case, the modes M4 and M5 are added to the modes M1, M2, and M3, and a suitable mode is determined from among the modes. Then, a mode to be applied to the main area AR1 and the recommendation area AR2 is set according to the determination result.

Note that the determination processing may be performed again.

For example, the control processing in each stage as described above is executed according to Fig. 17.

First, as first stage processing, in step S401, the control unit 11 performs output image setting for each area and controls the image processing unit 12 to start output of the delivery image PO.

In this case, at first, the entire image is displayed in the main area AR1. For example, an image captured by the imaging device 1 that captures an image of the entire stage in a bird's eye view is an image of the main area AR1.

For the recommendation area AR2, any mode is automatically selected. For example, the mode M1 having the smallest mode number is selected.

For the camera area AR3, images captured by the individual imaging devices 1 are displayed.

In step S402, the control unit 11 monitors the end timing. This is similar to that in step S302 of Fig. 16.

In step S403, the control unit 11 confirms whether or not the determination timing has come. This is processing of confirming whether or not it is a timing to perform the determination processing of the second stage in the fifth embodiment.

When these timings do not come, the processing of the first stage is continued.

In step S404, the control unit 11 confirms whether or not the user has performed an image selection operation. The image selection operation is an operation of designating the recommendation area AR2 or an operation of designating a certain frame W of the camera area AR3.

In a case where the image selection operation is detected, the control unit 11 branches the processing depending on whether the operation is for the recommendation area AR2 or the camera area AR3 in step S405.

In a case where the recommendation area AR2 is operated, the control unit 11 applies the mode applied to the recommendation area AR2 in the time point to the main area AR1 in step S406. Furthermore, in the recommendation area AR2, another mode is applied.

For example, in a case where the entire image is displayed in the main area AR1 and the mode M1 has been applied to the recommendation area AR2, the mode is switched to a state in which the mode M1 is applied to the main area AR1 and the mode M2 is applied to the recommendation area AR2.

Therefore, the user can change the state of the main area AR1 from a display state of the fixed entire image to a display state in which the image switching control is performed by a predetermined algorithm.

Note that as described above, for example, after the mode M1 is applied to the main area AR1 and the mode M2 is applied to the recommendation area AR2, in a case where the user performs an operation of designating the recommendation area AR2 again, the control unit 11 switches the state to a state in which the mode M2 is applied to the main area AR1 and the mode M3 is applied to, for example, the recommendation area AR2 in step S406.

Moreover, thereafter, in a case where the user performs an operation of designating the recommendation area AR2, the control unit 11 switches the state to a state in which the mode M3 is applied to the main area AR1 and the mode M1 is applied to, for example, the recommendation area AR2 in step S306.

In this manner, the application modes of the main area AR1 and the recommendation area AR2 are sequentially changed. For example, the user can change the application of the modes M1, M2, and M3 each time the user operates the recommendation area AR2.

In a case where the image selection operation by the user is detected, and the operation is an operation of designating a certain frame W in the camera area AR3, the control unit 11 proceeds to step S407, and causes the designated image to be displayed in the main area AR1.

Note that at this time, the display state of the main area AR1 may be displayed in the frame W designated in the camera area AR3. For example, this is an example of switching the images from the state of Fig. 15A to the state of Fig. 15B.

Furthermore, even in a case where the user performs an operation of designating the recommendation area AR2 again while an image captured by a certain imaging device 1 is displayed in the main area AR1 as described above, the control unit 11 is only required to apply the mode applied to the recommendation area AR2 to the main area AR1 and apply another mode to the recommendation area AR2 in step S406.

When the user operation is not detected in step S404, the control unit 11 proceeds to step S408 and confirms whether or not the mode is continuously applied for a predetermined time or more in the recommendation area AR2. When it is not in a state in which a certain mode is applied to the recommendation area AR2 for a predetermined time or more, the processing returns to step S402.

When a certain mode has been continuously applied to the recommendation area AR2 for a predetermined time or more, which is the time exceeding the time limit, the control unit 11 proceeds to step S409 and changes the mode to be applied to the recommendation area AR2.

That is, the mode applied to the recommendation area AR2 can be switched even in a case where the operation is not performed for a certain period of time. By switching the mode applied to the recommendation area AR2 in this manner, images in various switching control modes can be introduced to the user.

While such first stage processing is continued as described above, the control unit 11 determines the determination timing in step S403 according to a certain condition, and performs the second stage processing.

For example, the determination timing is determined under the conditions described in the fourth embodiment.

At the determination timing, the control unit 11 proceeds to step S420 and performs suitable mode determination. As in step S320 of Fig. 16, in the suitable mode determination, it is determined which switching control mode among the modes M1, M2, M3, and M4 the user's viewing tendency is close to. When it cannot be determined that the mode is close to any of the modes, the mode M5 that is a random mode is set.

When a mode suitable for the user is determined, the control unit 11 sets a mode applied to the main area AR1 and the recommendation area AR2 according to the determination in step S421.

Thereafter, in the main area AR1, any one of the modes M1, M2, M3, M4, and M5 is applied and image display is performed.

In the recommendation area AR2, a mode different from that of the main area AR1 is applied and image display is performed.

There is no change in the camera area AR3.

Thereafter, the processing of step S402 and subsequent steps are similarly performed, and the image of each area is displayed according to the user's operation, the viewing state (no operation), or the like.

The determination timing is further determined in step S403, and the determination processing in step S420 and the mode setting in step S421 may be performed again.

In the process of the above-described processing, when the end timing comes at a certain time point, the control unit 11 proceeds from step S302 to step S330, performs the end processing, and ends the series of processing.

### <9. Applicable processing example>

An applicable processing example will be described.

This is a processing example that can be additionally adopted in a processing example in which a certain switching control mode is applied to the main area AR1 as in the first to fifth embodiments.

In a case where the application to the main area AR1 is changed or an image captured by a specific imaging device 1 is displayed as in each embodiment, the elapsed time of the delivered musical piece or the like and the selected mode or image are continuously recorded as viewing tendency information RC for each user.

For example, the following pieces of viewing tendency information RC1, RC2, ..., and RC(x) are recorded as the viewing tendency information RC of a musical piece N1 of a certain user U1.

### · Viewing tendency information RC1: 0 minutes 00 seconds: musical piece viewing start

Note that since the musical piece is not necessarily viewed from the beginning of the musical piece, it is desirable to record a time code in the entire portion such that the time position of the "musical piece viewing start" in the entire live show or the entire musical piece can be seen. For example, the live image is recognized, and a fact that the user U1 starts viewing from a specific scene (specific shape) is recorded together with the scene. Alternatively, data may be recorded as metadata for the user U1 on the live image side.

· Viewing tendency information RC2: X minutes XX seconds: select application of mode M2
· Viewing tendency information RC3: Y minutes YY seconds: select input image PinC (image of imaging device 1C)
· Viewing tendency information RC4: Z minutes ZZ seconds: select application of mode M1
· Viewing tendency information RC(x): A minutes AA seconds: musical piece viewing end

As described above, for example, by recording the viewing tendency information RC in a combination of a certain musical piece N1 and the user U1, the control unit 11 can perform control on the basis of the viewing tendency information RC when the user U1 views the delivery of the same musical piece N1 from the next time.

For example, the mode to be applied to the main area AR1 can be changed at the timing as in the viewing tendency information RC, and the image to be displayed can be switched to the image captured by the specific imaging device 1. That is, the control is performed so as to reproduce the previous "viewing manner" of the user.

In this case, it is conceivable that the switching is performed at a timing slightly earlier than the time information of the viewing tendency information RC in consideration that the timing at the time of acquiring the previous viewing tendency information RC is a timing according to the user's operation and is slightly later than the timing truly desired by the user. Therefore, control with a higher degree of satisfaction of the user is possible.

On the other hand, even when the control to reproduce the previous viewing is performed, the user may not be satisfied. For example, in the user's operation at the time of acquiring the viewing tendency information RC, there is a case where in which viewing manner the user wants to perform viewing is not determined and the user has tried various operations. When such a viewing manner is reproduced, the user may feel unnatural. Accordingly, also at the time of reproduction control, it is assumed that the user performs an operation of selecting the recommendation area AR2 or the camera area AR3.

Therefore, in a case where the reproduction control is performed, the control unit 11 causes an image based on a mode with a high application frequency, which is determined from the viewing tendency information RC or an image captured by a specific imaging device 1 with a high display frequency to be displayed in the recommendation area AR2.

Therefore, when the user selects the recommendation area AR2, the viewing state close to the previous viewing manner can be easily provided.

Furthermore, control based on training by machine learning may be performed without performing reproduction control. Depending on the viewing tendency information RC, the tendency of the image desired by the user can be determined. Therefore, the suitable mode determination processing as described in the fourth and fifth embodiments may be performed using the viewing tendency information RC, and the mode determined to be suitable for the main area AR1 may be applied from the time point of starting the delivery at the next delivery opportunity.

Moreover, the control based on the viewing tendency information RC can also be executed in a case where the user U1 views another live delivery of the same musical piece N1.

For example, when the user U1 is a fan of a certain artist, it is assumed that the user U1 views the live delivery of the same musical piece N1 at various times and places many times.

Therefore, in a case where the viewing tendency information RC for the user U1 and the musical piece N1 is acquired at the time of delivery of a certain live event LV1, it is conceivable that the control unit 11 performs control using the viewing tendency information RC at the time of delivery of the musical piece N1 to the user U1 at another live event LV2. For example, the above-described reproduction control is performed using the viewing tendency information RC, or the mode application control according to the suitable mode determination result based on the viewing tendency information RC is performed.

However, in this case, at the live event LV1 and the live event LV2, the relationship between the image content and the imaging device 1 is not the same.

For example, at the live event LV1, the imaging devices 1A, 1B, ..., and 1(n) as illustrated in Fig. 2 are used and disposed on the stage. At this time, the imaging device 1A is disposed to image a keyboard performer, the imaging device 1B is disposed to image the hand of the keyboard performer, and the imaging device 1C is disposed to image the drum player...

On the other hand, at the live event LV2, imaging devices 100A, 100B, ..., and 100(m) are used, the imaging device 100A is disposed to image a drum performer, and the imaging device 100B is disposed to image the keyboard player...

In this manner, it is usually assumed that the number and setting states of the imaging devices 1 are different. Then, even when the viewing tendency information RC obtained in a state in which the images captured by the imaging devices 1A, 1B, ..., and 1(n) are the input images PinA, ..., and Pin(n) is used, in a case where the images captured by the imaging devices 100A, 100B, ..., and 100(m) are the input images PinA, PinB, ..., and Pin(m), the same viewing manner cannot be reproduced, and the suitable mode determination result cannot be applied.

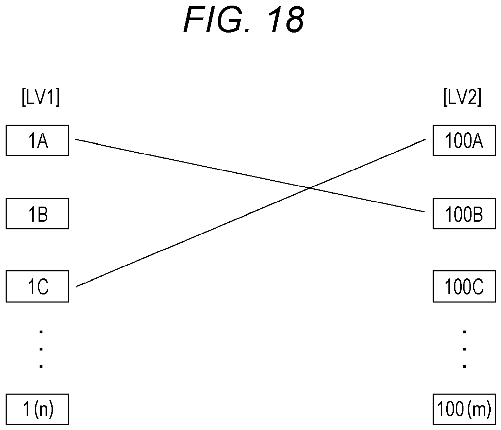

Thus, the imaging device 1 and the imaging device 100, which are used at the live events LV1 and LV2 are associated as illustrated in Fig. 18.

For example, the control unit 11 compares the images captured by the imaging device 1 and 100 at the live events LV1 and LV2, and performs processing of linking the imaging devices considered to have the most similar roles. For example, image analysis is performed to determine a subject, and a correspondence relationship of the most similar role is determined.

In the determination processing for the "most similar role", the following elements are used.
· Whether the subject is the same person, an equipment in the same category (for example, electric guitar), or the same equipment.
· Whether the number of subjects is equivalent or the same.
· Whether the orientation of the subject is the same
· Whether the size of the subject is substantially the same or whether the subject has the magnitude with a constant ratio.

Note that information regarding a person (artist or the like) of the subject, composition of the musical instruments, and the like can also be subjected to individual determination, equipment determination, and the like with reference to performer information or the like of a live event or the like.

According to such a determination result, information for associating the imaging devices 1 and 100 having the most similar roles as illustrated in Fig. 18 is generated and stored in the DB 11b.

For example, in a case where an archival image is delivered to both the live events LV1 and LV2, the above-described association processing can be performed in advance at a timing irrelevant to user's viewing.

Furthermore, in a case where the live event LV1 is an archive, the live event LV2 is currently being executed, and real-time delivery is being performed, the control unit 11 can perform association by determining image content of each imaging device 100 while the live event LV2 is in progress. The control using the viewing tendency information RC is only required to be performed in a stage where the imaging devices 1 and 100 are associated with each other. It is also conceivable that the entire image of the stage is presented in the main area AR1 for the time until the association can be made.

### <10. Conclusion and Modification example>

According to the above-described embodiments, the following effects can be obtained.

The image processing device 10 according to the embodiment includes an image processing unit that generates a delivery image in which a main area AR1 (first area) which is a main image area and a recommendation area AR2 (second area) which is an image area different from the main area AR1 are formed in a screen on the basis of a plurality of input images Pin which are images obtained by imaging an event by a plurality of imaging devices 1. Here, the main area AR1 which is the main image region can be considered as, for example, an area having the largest area in the screen. Alternatively, the main area AR1 which is the main image area may be considered as, for example, an area in which an image with the highest resolution is displayed in the screen. Therefore, for example, the image processing unit 12 generates, in the screen, a delivery image PO including the image of the main area AR1 (first area) and the image of the recommendation area AR2 (second area) which is an image area smaller than the main area AR1, on the basis of a plurality of the input images Pin. Alternatively, for example, the image processing unit 12 generates, in the screen, a delivery image PO including the image of the main area AR1 having the highest resolution and the image of the recommendation area AR2 having a resolution lower than that of the image of the main area AR1 on the basis of a plurality of the input images Pin.

Furthermore, the image processing device 10 includes a control unit 11 that controls the image processing unit 12 such that control in a plurality of switching control modes (modes M1, M2, ...) can be executed when the input images Pin included in the delivery image PO are switched, and the captured image displayed in the recommendation area AR2 can be switched on the basis of any of a plurality of the switching control modes.

Thus, a plurality of the switching control modes for the image of the recommendation area AR2 can be applied.

For example, in delivery of a music live show or the like, there is a difference in that each individual user wants to view. Assuming a person who wants to view an image in accordance with the progress of a musical piece of a performer, a person who is interested in a technique of playing a musical instrument, a person who is interested in equipment itself such as a musical instrument, a fan of an individual artist, and the like, each desired scene is different even in the delivery of one live performance. Therefore, it is conceivable that the user can select images (input images Pin) captured by a large number of imaging devices 1 at the time of viewing.

However, it is more desirable that not all the images are selected by the user but the images are automatically switched according to the desire of each viewer.

Therefore, in the embodiment, a plurality of the switching control modes is prepared, and the image of the recommendation area AR2 is switched by control based on any of the switching control modes. In a case where image switching in the recommendation area AR2 is performed so as to match a scene that the user wants to view, the switching control mode applied to the recommendation area AR2 is suitable for the user.

In the embodiment, an example has been described in which the control unit 11 controls the image processing unit 12 such that the image switching based on the switching mode applied to the recommendation area AR2 is applied to the image of the main area AR1 when the selection operation of the recommendation area AR2 by the delivery destination user is detected (refer to steps S102, S103 and the like in Fig. 7).

That is, according to the user's selection operation for the recommendation area AR2, the image switching control mode for the recommendation area AR2 is applied in the high-resolution main area AR1 for the image viewed by the user.

Therefore, when the user thinks that it is preferable to switch the image of the recommendation area AR2, the user can view the image that has been displayed in the recommendation area AR2 so far in the main area AR1 with high resolution by performing an operation of selecting the recommendation area AR2. That is, the user can easily enjoy the delivery image subjected to the image switching close to the preference by responding to the recommendation of the recommendation area AR2.

For example, the delivery destination user can view the image captured by the imaging device 1 with high resolution, the captured image showing the specific performer himself/herself or the specific portion of the performer at a certain timing, after viewing the entire stage with high resolution at the beginning of the musical piece. Furthermore, the user can request such a desired image to be delivered by performing operations such as touch on the screen and pinch-in/pinch-out.

This also makes it possible to know various aspects of the performer. When a large number of imaging devices 1 are installed, the user can obtain more pieces of information than information obtained by participating in the real live show (and viewing the live show at the performance venue).

Furthermore, since the performer and the musical instrument used may not be seen depending on the position of the seat even in the real live, it is also possible to increase the added value of the real live show by performing the delivery of the embodiment in combination at a live venue or the like.

Note that the operation of selecting the recommendation area AR2 is an operation of changing the display of the main area AR1, but the display of the main area AR1 may be changed due to an erroneous touch by the user. Therefore, for the operation of designating the recommendation area AR2, an operation method such as a long press operation or a double touch (double tap) may be adopted. The same applies to the operation of designating the frame W in the camera area AR3.

In the embodiment, in addition to the main area AR1 and the recommendation area AR2, the image processing unit 12 generates the delivery image PO in which the camera area AR3 (third area) individually displaying all or some of a plurality of the input images Pin are formed in the screen. Then, an example has been described in which the control unit 11 controls the image processing unit 12 such that the input images Pin according to the selection operation are displayed in the main area AR1 when the selection operation of the input image Pin in the camera area AR3 by the delivery destination user is detected (refer to steps S104, S105 and the like in Fig. 7).

By preparing the camera area AR3, the user can recognize the input images Pin captured by the imaging devices 1, and can select a desiring image. For example, when the image of the recommendation area AR2 is not the scene the user wants to view, the user can view the desiring image with a high degree of freedom by selecting the captured image from the camera area AR3 and causing the captured image to be displayed in the main area AR1.

Furthermore, thereafter, such a selection operation of the camera area AR3 becomes training data for selecting a switching control mode appropriate for the user. Since what kind of image content each of the input image Pin that can be easily selected by the user has can be determined by accumulating the operations for the camera area AR3, the selection of the switching control mode to be applied to the recommendation area AR2 and the main area AR1, for example, the accuracy of the suitable mode determination described in Figs. 16 and 17 can be improved.

Note that an example in which the camera area AR3 as the third area is not provided is also conceivable.

In the embodiment, one of a plurality of the switching control modes is the mode M1 in which the image switching control is performed on the basis of the progress information obtained in advance regarding an event.

The mode M1 described above is a mode for performing image switching control on the basis of such progress information of the musical score or the like. An event to which the system of the present embodiment can be applied is assumed to be a music live show, a play, an opera, a ballet, a dance, or the like, and the progress thereof is determined to some extent. That is, the event is an event (including a part of the event) in which progress information of a musical score for each musical piece, a live set list, a script, and a scenario can be obtained.

For example, in the music live show, when there is musical score information as progress information regarding a musical piece, a period during which singing is mainly performed, a period during which a lead musical instrument is mainly played, a period during which a drum is a highlight, a period during which backing can be paid attention, and the like are seen in advance during a performance period of the musical piece. In the mode M1, on the basis of such progress information, it is possible to perform image switching control such that the image is sequentially switched to the image of the main performer of the musical piece in the delivery image PO of the music performance.

Note that the progress information may be data itself such as a musical score or a scenario, or may be information generated by analyzing the musical score or the like, for example, information specifying an image switching timing and a designated value of an image to be switched in time series.

In the embodiment, one of a plurality of the switching control modes is the mode M2 in which image switching control is performed on a delivery image for a specific delivery destination user on the basis of viewing information of the delivery destination user other than the specific delivery destination user.

The mode M2 described above is a mode for performing image switching control on the basis of viewing information of other delivery destination users. For example, the mode is a mode in which control is sequentially performed such that the image is switched to an image (image that has been viewed) viewed by the largest number of people among a large number of other users. Such control of the mode M2 is suitable for a user who wants to enjoy an image that other many people are interested in.

Note that it is conceivable that the viewing information includes the number of selection operations for instructing display of the input images Pin, and the number of people actually viewing the input images Pin. The viewing information referred to herein is only required to be considered as information corresponding to the number of viewed delivery images without audio.

In the embodiment, one of a plurality of the switching control modes is the mode M3 in which image switching control is performed on a delivery image for a specific delivery destination user on the basis of viewing information of other delivery destination users having an attribute the same as or similar to that of the specific delivery destination user.

The mode M3 described above is a mode for performing image switching control on the basis of viewing information of other delivery destination users having the same or similar attribute. For example, the mode is a mode in which control is sequentially performed such that the image viewed by a large number of people (image which has been viewed by a large number of people) of people estimated to have the preference similar to the user himself/herself among other users. Such control of the mode M3 is suitable for a user who wants to enjoy an image that people having the similar preference are interested in.

In the embodiment, one of a plurality of the switching control modes is the mode M4 in which the image switching control is performed on a plurality of the input images of a specific subjects.

The mode M4 described above is a mode in which images are switched from various viewpoints for a certain subject such that a certain subject, for example, a specific artist can be viewed with attention. Such control of the mode M4 is suitable for a user who is a fan of the specific artist or wants to pay attention to the performance.

In the first and second embodiments, an example has been described in which the control unit 11 performs control such that the input image Pin switched in the processing of the switching control mode selected corresponding to the delivery destination user is displayed with a higher frequency than the input image Pin switched in the processing of another switching control mode in the recommendation area AR2.

As the switching control mode applied to the recommendation area AR2, the mode selected in step S200 of Fig. 8 or step S200A of Fig. 9 is preferentially applied. However, not only the mode but also other modes are applied. At this time, the selected mode is preferentially applied, and the input image Pin according to the selected mode is displayed with the higher frequency than images according to other modes.

Therefore, while the image of the recommendation area AR2 is based on the selected mode as much as possible, the input images Pin in other modes are occasionally presented to the user, and an opportunity for the user to select can be given. Since it is conceivable that image switching in another mode is more preferable for the user, it is possible to present desirable image switching to the user in some cases.

Furthermore, by setting the switching control mode selected according to the specific delivery destination user, that is, by providing the image of the recommendation area corresponding to each user for each individual user, it is possible to increase the possibility that the image content is more suitable for each user.

Moreover, switching the application of a plurality of the modes in the recommendation area AR2 means that it is not necessary to prepare a display area for each mode. This also provides an advantage that the display area corresponding to the mode does not need to be unnecessarily increased.

In the first embodiment, the switching control mode selected according to the delivery destination user is a switching control mode designated through the selection operation of the delivery destination user (refer to step S200 in Fig. 8).

As the switching control mode applied to the recommendation area AR2, the mode selected through the user operation is preferentially applied. For example, when the mode M1 is selected, the frequency ratio between the mode M1 and the mode M2 is set to 90:10.

Therefore, it is possible to provide the user with an image occasionally switched by another mode while respecting the intention of the user. Therefore, it is possible to make the user aware of an image in another mode.

In the second embodiment, the switching control mode selected according to the delivery destination user is a switching control mode designated through automatic selection processing (refer to step S200A in Fig. 9).

For the switching control mode to be preferentially applied to the recommendation area AR2, it is conceivable that the control unit 11 automatically selects the switching control mode. For example, it is conceivable that selection is performed according to an attribute of the user, or selection is performed according to the training result in the machine learning using the past selection status, the history of the image switching operation, or the like. Furthermore, a mode that is often applied to other delivery destination users may be selected.

By automatically selecting a mode suitable for the user, it is easy to make the image of the recommendation area AR2 a desirable image for the user. By applying another mode with a lower frequency, it is possible to make the user aware of an image in another mode.

In the first, second, and third embodiments, an example has been described in which the control unit 11 variably sets the display frequency value of the input image Pin switched in the processing of the switching control mode selected according to the delivery destination user and the display frequency value of the input image Pin switched in the processing of another switching control mode in the recommendation area AR2 in accordance with the operation of the delivery destination user, and controls the input image Pin based on each switching control mode to be displayed with a frequency corresponding to the display frequency value (refer to Figs. 8, 9, and 10) .

By varying the display frequency value for the switching control mode applied to the recommendation area AR2 in accordance with the user operation, it is possible to increase the display frequency of the image in the mode considered to be desirable by the user.

Therefore, in a case where the mode is selected first as in the first and second embodiments, when the other mode is more suitable for the user, the application frequency of the other mode becomes higher.

Furthermore, as in the third embodiment, even when the mode selection is not performed in advance, the frequency of the image according to the mode preferred by the user gradually increases.

Therefore, an image desirable for the user is easily displayed.

In the fourth embodiment, an example has been described in which the control unit 11 performs control such that the input image Pin switched in the processing of the reference mode (reference switching control mode) selected according to the delivery destination user is displayed in the main area AR1, and the input image Pin switched in the processing of the switching control mode other than the reference mode is displayed in the recommendation area AR2 (refer to Fig. 16).

In the main area AR1, the reference mode selected according to the user is applied through, for example, a selection operation of the user, automatic selection based on training by the machine learning, or the like, and thus the possibility that image switching desired by the user is performed in the main area AR1 can be increased. Then, in the recommendation area AR2, image display to which another mode is applied can be presented to the user.

In the fourth embodiment, the control unit 11 performs control such that the input image Pin switched in the processing of the switching control mode applied to the recommendation area AR2 is displayed in the main area AR1 when the selection operation for the recommendation area AR2 is performed, and the input image Pin switched in the reference mode is displayed in the recommendation area AR2 (refer to step S307 in Fig. 16). Furthermore, an example has been described in which the control unit 11 performs control such that the input image Pin switched in the processing of another switching control mode is further displayed in the recommendation area AR2 according to the elapse of a predetermined time (see step S312 in Fig. 16) .

When the user desires an image, the mode applied to the recommendation area AR2 through the operation can be applied in the main area AR1. That is, in a case where the image content switched in the recommendation area AR2 is considered to be preferable, the image content can be viewed in the main area AR1.

Furthermore, in a case where a state in which the reference mode is applied to the recommendation area AR2 continues for a predetermined time, it can be estimated that the user is less interested in the image in the reference mode. Therefore, by further displaying another mode in the recommendation area AR2, another switching control mode can be presented.

In the fourth embodiment, an example has been described in which the control unit 11 performs the determination processing for the switching control mode suitable for the user among a plurality of the switching control modes on the basis of the history of the selection operation of the user, and updates the reference mode according to the determination result (refer to steps S320, S321, and S301 in Fig. 16).

It is possible to determine which mode is suitable for the user by using the history of the operation of the user for the recommendation area AR2 and the camera area AR3. Therefore, the reference mode suitable for the user can be set by performing the determination processing and updating the reference mode.

Furthermore, in the processing example of Fig. 16, first, the user is caused to select a favorite mode among the modes M1, M2, and M3, and the selected mode is set as a reference mode. In the determination processing, a suitable mode among the modes M1, M2, M3, M4, and M5 is determined. That is, in the determination processing, there are more types of modes than at the time of user selection. Of course, the suitable mode determination may be performed in five or more different modes. In this manner, it is possible to provide a more suitable mode through the determination processing as a result while preventing the user from being confused about the selection operation at the time of selection.

In the fifth embodiment, an example has been described in which the control unit 11 performs control such that the input image Pin from one imaging device 1 is fixedly displayed in the main area AR1 in an initial state, and the input image Pin switched in the processing of a predetermined switching control mode is displayed in the recommendation area AR2 (refer to step S401 of Fig. 17).

In the initial state, a specific input image Pin such as the image of the entire stage is fixedly displayed in the main area AR1. In the main area AR1, the image is the input image Pin initially captured by a specific imaging device 1 such as an entire image, and the image switching is not performed. On the other hand, in a case where the image display to which a certain switching control mode is applied is performed in the recommendation area AR2, the user performs an operation of selecting the recommendation area AR2 when the user likes the image and can view the image based on the switching control mode in the main area AR1. As a result, the user can select a display method in which the input image Pin is switched according to preference.

Note that such processing can also be applied to the first, second, and third embodiments.

In the embodiment, the image processing unit 12 performs data size conversion processing (image size processing 15A, 15B, ..., and 15(n)) on the input images Pin used for display in the main area AR1 and the recommendation area AR2 for a plurality of the input images Pin. Then, in the delivery image generation processing 16, the delivery image PO including the input images Pin (that is, the images S1 and S2) after the conversion processing is generated corresponding to each individual delivery destination user (refer to Fig. 3).

The image processing unit 12 generates an image S1 having a size for the main area AR1 and an image S2 having a size for the recommendation area AR2 for each of the input images Pin, selects and synthesizes the input images Pin to be displayed at each time point, and generates a delivery image PO of one channel for one user. Such a delivery image PO is generated for each delivery destination user. That is, generation is performed for a plurality of channels. As a result, the delivery images PO having contents for individual users having various preferences can be generated. Furthermore, by using pieces of the synthesized image data as the delivery images PO, each of the delivery images PO is not delivered with a plurality of the images in parallel. Therefore, communication data amount does not become excessive, and a processing load is not particularly generated on the user terminal 3 side.

Note that the image processing device 10 may deliver the image S1 as the high-resolution image data and the image S2 as the data with a relatively low resolution without synthesizing the image S1 and the image S2, and display the images in the main area AR1 and the recommendation area AR2 in a divided manner on the user terminal 3.

Furthermore, it is also conceivable that the image processing unit 12 generates delivery images PO of a plurality of channels assuming a combination of areas at all times, selects a channel according to the user, and delivers the images.

For example, for the input images PinA, ..., and Pin(n), all the synthesized images of the combinations to be displayed in the main area AR1 and the recommendation area AR2 are generated for channels. Then, according to the operation of each user or the application mode, the delivery image PO of the corresponding channel is selected and delivered according to the user.

Furthermore, in the embodiment, in order to further use the images to be displayed in the camera area AR3 in which each of all or some of a plurality of the input images Pin is displayed, the image processing unit 12 performs data size conversion processing (image size processing 15A, 15B, ..., and 15(n)) on the input images Pin such that data size is smaller than the image S2 in the recommendation area AR2. Then, in the delivery image generation processing 16, the delivery image PO including the input images Pin (that is, the images S1, S2, and S3) after the conversion processing is generated corresponding to each individual delivery destination user (refer to Fig. 3).

The image processing unit 12 generates an image S1 having a size for the main area AR1, an image S2 having a size for the recommendation area AR2, the image S3 having a size for the camera area AR3 for each of the input images Pin, selects and synthesizes the input images Pin to be displayed at each time point, and generates a delivery image PO of one channel for one user. As a result, it is possible to generate the delivery image PO corresponding to each of the users having various preferences and having contents enabling selection of the input image Pin from each imaging device 1. Furthermore, by using pieces of the synthesized image data as the delivery images PO, each of the delivery images PO is not delivered with a plurality of the images in parallel. Therefore, communication data amount does not become excessive, and a processing load is not particularly generated on the user terminal 3 side.

Note that even in a case where the camera area AR3 is assumed, the image processing device 10 may deliver the image S1 as the high-resolution image data, the image S2 as the data with a relatively low resolution, and the image S3 as the data with further low resolution without synthesizing the image S1, the image S2, and the image S3, and display the images in the main area AR1, the recommendation area AR2, and the camera area AR3 in a divided manner on the user terminal 3.

In the embodiment, an example has been described in which the control unit 11 controls the image processing unit 12 such that the screen division of the main area AR1 and the recommendation area AR2 in the delivery image PO for the delivery destination user is canceled by the operation of the delivery destination user, the main area AR1 and the recommendation area AR2 are shared, and the image switching based on the switching mode applied to the recommendation area AR2 is performed in the shared area.

As described with reference to Figs. 13 and 14, the recommendation area AR2 and the main area AR1 are shared through the operation on the check box 30 in the recommendation area AR2. Therefore, in a case where the user desires the image, the user can enjoy the delivery image in a state of image switching by the recommendation mode on a wide screen.

The program according to the embodiment is a program causing, for example, a CPU, a DSP, or the like, or a device including the CPU and the DSP to execute the processing of the control unit 11 described above.

That is, the program according to the embodiment is a program causing the control unit to execute the processing, the control unit controlling an image processing unit that generates a delivery image in which a main area AR1 (first area) which is a main image area and a recommendation area AR2 (second area) which is an image area different from the main area AR1 are formed in a screen on the basis of a plurality of the input images Pin which are images obtained by imaging an event by a plurality of imaging devices 1. The program causes the control unit 11 to execute the processing of controlling the image processing unit 12 such that control in a plurality of switching control modes can be executed when the input images Pin included in the delivery image PO are switched, and the captured image displayed in the recommendation area AR2 can be switched on the basis of any of a plurality of the switching control modes.

With such a program, the image processing device 10 described above can be implemented by various types of computer devices.

Such a program can be recorded in advance in an HDD as a recording medium built in a device such as a computer device, a ROM in a microcomputer having a CPU, or the like. Furthermore, such a program can be temporarily or permanently stored (recorded) in a removable recording medium such as a flexible disk, a compact disc read only memory (CD-ROM), a magneto optical (MO) disk, a digital versatile disc (DVD), a Blu-ray Disc (registered trademark), a magnetic disk, a semiconductor memory, or a memory card. Such a removable recording medium can be provided as so-called package software.

Furthermore, such a program can be installed from the removable recording medium into a personal computer or the like, or can be downloaded from a download site via a network such as a local area network (LAN) or the Internet.

Furthermore, such a program is suitable for providing the image processing device 10 according to the embodiment in a wide range. For example, by downloading the program to a personal computer, a communication device, a portable terminal device such as a smartphone or a tablet, a mobile phone, a game device, a video device, a personal digital assistant (PDA), or the like, these devices can be caused to function as the image processing device 10 of the present disclosure.

Note that the effects described in the present specification are merely examples and are not limited, and other effects may be provided.

Note that the present technology can also have the following configurations.
(1) An image processing device including:
   an image processing unit configured to generate a delivery image in which a first area that is a main image area and a second area that is an image area different from the first area are formed in a screen on the basis of a plurality of input images that are images obtained by imaging an event by a plurality of imaging devices; and
   a control unit configured to control the image processing unit such that control by a plurality of switching control modes is capable of being executed with respect to switching of each of the input images included in the delivery image and each of the captured images displayed in the second area is switched on the basis of any of the plurality of switching control modes.
(2) The image processing device according to (1),
   in which the control unit
   controls the image processing unit such that image switching based on a switching control mode applied to the second area is applied to an image of the first area when a selection operation for the second area by a delivery destination user is detected.
(3) The image processing device according to (1) or (2),
   in which the image processing unit
   generates a delivery image in which a third area for individually displaying all or some of the plurality of input images is formed in the screen in addition to the first area and the second area, and
   the control unit
   controls the image processing unit such that each of the input images related to the selection operation is displayed in the first area when the selection operation for the input image in the third area by the delivery destination user is detected.
(4) The image processing device according to any one of (1) to (3),
   in which one of the plurality of switching control modes is a mode in which image switching control is performed on the basis of progress information obtained in advance regarding an event.
(5) The image processing device according to any one of (1) to (4),
   in which one of the plurality of switching control modes is a mode in which image switching control is performed on the delivery image for a specific delivery destination user on the basis of viewing information of a delivery destination user other than the specific delivery destination user.
(6) The image processing device according to any one of (1) to (5),
   in which one of the plurality of switching control modes is a mode in which image switching control is performed on the delivery image for a specific delivery destination user on the basis of viewing information of other delivery destination users having an attribute the same as or similar to an attribute of the specific delivery destination user.
(7) The image processing device according to any one of (1) to (6),
   in which one of the plurality of switching control modes is a mode in which image switching control is performed on the plurality of input images of a specific subjects.
(8) The image processing device according to any one of (1) to (7),
   in which the control unit
   performs control such that each of the input images switched in processing of the switching control mode selected according to a delivery destination user is displayed with a higher frequency than each of the input images switched in processing of another switching control mode in the second area.
(9) The image processing device according to (8),
   in which the switching control mode selected according to the delivery destination user is a switching control mode designated through a selection operation of the delivery destination user.
(10) The image processing device according to (8),
   in which the switching control mode selected according to the delivery destination user is a switching control mode designated through automatic selection processing.
(11) The image processing device according to any one of (8) to (10),
   in which the control unit
   variably sets a display frequency value of the input image switched in the processing of the switching control mode selected according to the delivery destination user and a display frequency value of the input image switched in the processing of another switching control mode in the second area in accordance with an operation of the delivery destination user, and
   controls the input image based on each switching control mode to be displayed with a frequency corresponding to the display frequency value.
(12) The image processing device according to any one of (1) to (7),
   in which the control unit
   performs control such that the input image switched in processing of a reference switching control mode selected according to a delivery destination user is displayed in the first area, and the input image switched in processing of a switching control mode other than the reference switching control mode is displayed in the second area.
(13) The image processing device according to (12),
   in which the control unit
   performs control such that the input image switched in the processing of the switching control mode applied to the second area is displayed in the first area when a selection operation for the second area is performed, and the input image switched in the processing of the reference switching control mode is displayed in the second area, and
   performs control such that the input image switched in processing of another switching control mode is further displayed in the second area according to elapse of a predetermined time.
(14) The image processing device according to (12) or (13),
   in which the control unit
   performs determination processing for the switching control mode suitable for a user among the plurality of switching control modes on the basis of a history of a selection operation of the user, and updates the reference switching control mode according to a determination result.
(15) The image processing device according to any one of (1) to (7),
   in which the control unit
   performs control such that the input image from one imaging device is fixedly displayed in the first area in an initial state, and the input image switched in processing of a predetermined switching control mode is displayed in the second area.
(16) The image processing device according to any one of (1) to (15),
   in which the image processing unit
   performs data size conversion processing of each of the input images to be used for display in the first area and the second area with respect to the plurality of input images, and generates, for each individual delivery destination user, the delivery image including the input image after the conversion processing.
(17) The image processing device according to any one of (1) to (16),
   in which the image processing unit
   performs data size conversion processing of each of the input images to be used for display in the first area and the second area, performs data size conversion processing of the input image such that a data size of the input image is smaller than a data size of an image in the second area in order to further use images to be displayed in the third area in which all or some of the plurality of input images are displayed, and generates the delivery image including the input image after the conversion processing according to each delivery destination user.
(18) The image processing device according to any one of (1) to (17),
   in which the control unit controls the image processing unit such that screen division of the first area and the second area in the delivery image for a delivery destination user is canceled by an operation of the delivery destination user, the first area and the second area are shared, and image switching based on a switching mode applied to the second area is performed in the shared area.
(19) An image processing method including causing an image processing device to:
   generate a delivery image in which a first area that is a main image area and a second area that is an image area different from the first area are formed in a screen on the basis of a plurality of input images that are images obtained by imaging an event by a plurality of imaging devices; and
   perform control such that control by a plurality of switching control modes is capable of being executed with respect to switching of each of the input images included in the delivery image and each of the captured images displayed in the second area is switched on the basis of any of the plurality of switching control modes.
(20) A program causing a control unit to execute processing, the control unit being configured to control an image processing unit configured to generate a delivery image in which a first area that is a main image area and a second area that is an image area different from the first area are formed in a screen on the basis of a plurality of input images that are images obtained by imaging an event by a plurality of imaging devices,
   the program causing the control unit to control the image processing unit such that control by a plurality of switching control modes is capable of being executed with respect to switching of each of the input images included in the delivery image and each of the captured images displayed in the second area is switched on the basis of any of the plurality of switching control modes.

### REFERENCE SIGNS LIST

- 1, 100: Imaging device (camera)
- 2: Server device
- 3: User terminal
- 5: Transceiver
- 6: Network
- 10: Image processing device
- 11: Control unit
- 11a: Processing instruction unit
- 11b: DB
- 12: Image processing unit
- 15, 15A ... 15(n): Image size processing
- 16: Delivery image generation processing
- 30: Check box
- 71: CPU

## Claims

1. An image processing device comprising:
an image processing unit configured to generate a delivery image in which a first area that is a main image area and a second area that is an image area different from the first area are formed in a screen on a basis of a plurality of input images that are images obtained by imaging an event by a plurality of imaging devices; and
a control unit configured to control the image processing unit such that control by a plurality of switching control modes is capable of being executed with respect to switching of each of the input images included in the delivery image and each of the captured images displayed in the second area is switched on a basis of any of the plurality of switching control modes.

2. The image processing device according to claim 1,
wherein the control unit
controls the image processing unit such that image switching based on a switching control mode applied to the second area is applied to an image of the first area when a selection operation for the second area by a delivery destination user is detected.

3. The image processing device according to claim 1,
wherein the image processing unit
generates a delivery image in which a third area for individually displaying all or some of the plurality of input images is formed in the screen in addition to the first area and the second area, and
the control unit
controls the image processing unit such that each of the input images related to the selection operation is displayed in the first area when the selection operation for the input image in the third area by the delivery destination user is detected.

4. The image processing device according to claim 1,
wherein one of the plurality of switching control modes is a mode in which image switching control is performed on a basis of progress information obtained in advance regarding an event.

5. The image processing device according to claim 1,
wherein one of the plurality of switching control modes is a mode in which image switching control is performed on the delivery image for a specific delivery destination user on a basis of viewing information of a delivery destination user other than the specific delivery destination user.

6. The image processing device according to claim 1,
wherein one of the plurality of switching control modes is a mode in which image switching control is performed on the delivery image for a specific delivery destination user on a basis of viewing information of other delivery destination users having an attribute the same as or similar to an attribute of the specific delivery destination user.

7. The image processing device according to claim 1,
wherein one of the plurality of switching control modes is a mode in which image switching control is performed on the plurality of input images of a specific subjects.

8. The image processing device according to claim 1,
wherein the control unit
performs control such that each of the input images switched in processing of the switching control mode selected according to a delivery destination user is displayed with a higher frequency than each of the input images switched in processing of another switching control mode in the second area.

9. The image processing device according to claim 8,
wherein the switching control mode selected according to the delivery destination user is a switching control mode designated through a selection operation of the delivery destination user.

10. The image processing device according to claim 8,
wherein the switching control mode selected according to the delivery destination user is a switching control mode designated through automatic selection processing.

11. The image processing device according to claim 8,
wherein the control unit
variably sets a display frequency value of the input image switched in the processing of the switching control mode selected according to the delivery destination user and a display frequency value of the input image switched in the processing of another switching control mode in the second area in accordance with an operation of the delivery destination user, and
controls the input image based on each switching control mode to be displayed with a frequency corresponding to the display frequency value.

12. The image processing device according to claim 1,
wherein the control unit
performs control such that the input image switched in processing of a reference switching control mode selected according to a delivery destination user is displayed in the first area, and the input image switched in processing of a switching control mode other than the reference switching control mode is displayed in the second area.

13. The image processing device according to claim 12,
wherein the control unit
performs control such that the input image switched in the processing of the switching control mode applied to the second area is displayed in the first area when a selection operation for the second area is performed, and the input image switched in the processing of the reference switching control mode is displayed in the second area, and
performs control such that the input image switched in processing of another switching control mode is further displayed in the second area according to elapse of a predetermined time.

14. The image processing device according to claim 12,
wherein the control unit
performs determination processing for the switching control mode suitable for a user among the plurality of switching control modes on a basis of a history of a selection operation of the user, and updates the reference switching control mode according to a determination result.

15. The image processing device according to claim 1,
wherein the control unit
performs control such that the input image from one imaging device is fixedly displayed in the first area in an initial state, and the input image switched in processing of a predetermined switching control mode is displayed in the second area.

16. The image processing device according to claim 1,
wherein the image processing unit
performs data size conversion processing of each of the input images to be used for display in the first area and the second area with respect to the plurality of input images, and generates, for each individual delivery destination user, the delivery image including the input image after the conversion processing.

17. The image processing device according to claim 1,
wherein the image processing unit
performs data size conversion processing of each of the input images to be used for display in the first area and the second area, performs data size conversion processing of the input image such that a data size of the input image is smaller than a data size of an image in the second area in order to further use images to be displayed in the third area in which all or some of the plurality of input images are displayed, and generates the delivery image including the input image after the conversion processing according to each delivery destination user.

18. The image processing device according to claim 1,
wherein the control unit controls the image processing unit such that screen division of the first area and the second area in the delivery image for a delivery destination user is canceled by an operation of the delivery destination user, the first area and the second area are shared, and image switching based on a switching mode applied to the second area is performed in the shared area.

19. An image processing method comprising causing an image processing device to:
generate a delivery image in which a first area that is a main image area and a second area that is an image area different from the first area are formed in a screen on a basis of a plurality of input images that are images obtained by imaging an event by a plurality of imaging devices; and
perform control such that control by a plurality of switching control modes is capable of being executed with respect to switching of each of the input images included in the delivery image and each of the captured images displayed in the second area is switched on a basis of any of the plurality of switching control modes.

20. A program causing a control unit to execute processing, the control unit being configured to control an image processing unit configured to generate a delivery image in which a first area that is a main image area and a second area that is an image area different from the first area are formed in a screen on a basis of a plurality of input images that are images obtained by imaging an event by a plurality of imaging devices,
the program causing the control unit to control the image processing unit such that control by a plurality of switching control modes is capable of being executed with respect to switching of each of the input images included in the delivery image and each of the captured images displayed in the second area is switched on a basis of any of the plurality of switching control modes.
